(19) Europäisches Patentamt / European Patent Office / Office européen des brevets

(11) EP 3 008 100 B1

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(21) Anmeldenummer: **14728985.4**

(22) Anmeldetag: **10.06.2014**

(51) Int Cl.:
***C08G 2/38*** *(2006.01)* ***C08G 64/18*** *(2006.01)*
***C08G 64/34*** *(2006.01)* ***C08G 64/42*** *(2006.01)*
***C08G 18/44*** *(2006.01)*

(86) Internationale Anmeldenummer:
**PCT/EP2014/061969**

(87) Internationale Veröffentlichungsnummer:
**WO 2014/198689 (18.12.2014 Gazette 2014/51)**

(54) **POLYETHERCARBONAT-POLYOXYMETHYLEN-BLOCK-COPOLYMERE**

POLYETHER CARBONATE POLYOXYMETHYLENE BLOCK COPOLYMERS

COPOLYMÈRES EN BLOC DE POLYOXYMÉTHYLÈNE DE POLYÉTHERCARBONATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2013 EP 13171772**

(43) Veröffentlichungstag der Anmeldung:
**20.04.2016 Patentblatt 2016/16**

(73) Patentinhaber: **Covestro Deutschland AG**
**51373 Leverkusen (DE)**

(72) Erfinder:
- **MÜLLER, Thomas Ernst**
**52062 Aachen (DE)**
- **GÜRTLER, Christoph**
**50735 Köln (DE)**
- **LEITNER, Walter**
**52074 Aachen (DE)**
- **VOGT, Henning**
**52066 Aachen (DE)**
- **BARATH, Gabor**
**52076 Aachen (DE)**
- **KRAUTSCHICK, Mario**
**41836 Hückelhoven (DE)**

(74) Vertreter: **Levpat**
**c/o Covestro AG**
**Gebäude 4825**
**51365 Leverkusen (DE)**

(56) Entgegenhaltungen:
**GB-A- 807 589 US-A1- 2011 218 127**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 008 100 B1

## Beschreibung

Die vorliegende Erfindung betrifft ein Verfahren zur Herstellung von Polyethercarbonat-Polyoxymethylen-Block-Copolymeren, umfassend den Schritt der Polymerisation von Formaldehyd in Gegenwart eines Polyethercarbonats mit mindestens einem Zerewitinoff-aktiven H-Atom. Sie betrifft weiterhin durch ein solches Verfahren erhältliche Polyethercarbonat-Polyoxymethylen-Block-Copolymere sowie deren Verwendung zur Herstellung von Polyurethan-Polymeren.

Block-Copolymere enthaltend Polyoxymethylen-Einheiten neben anderen Polymerisat- und Polykondensat-Einheiten werden beispielsweise in GB 807589, EP 1 418 190 A1, US 3,754,053, US 2002/0016395, JP 04-306215, GB 1164997 und US 4352914 beschrieben. Die neben Polyoxymethylen-Einheiten vorliegenden anderen Polymerisat- oder Polykondensat-Einheiten umfassen Polyalkylenglykol-Einheiten, insbesondere Polytetramehylenglykol- und Polyethylenglykol-Einheiten, ferner Vinylacetat-Crotonsäure-Copolymer-, Methylmethacrylat-Vinyloxyethylamin-Copolymer-, Vinylacetat-Allylacetoacetat-Copolymer-, Vinyloxyethylamin-Isobutylmethacrylat-Copolymer-, dihydroxylierte Polybutadien- und difunktionalisierte Polyethylen-Einheiten.

Die Herstellung von Polyethercarbonaten mit mindestens einem Zerewitinoff-aktiven H-Atom kann durch katalytische Umsetzung von Alkylenoxiden (Epoxiden) und Kohlendioxid in Anwesenheit von H-funktionellen Startersubstanzen ("Starter") erfolgen und wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl, Arylalkyl oder Aryl steht, der jeweils auch Heteroatome wie beispielsweise O, S, Si usw. enthalten kann, und wobei a, b, c und d für eine ganzzahlige Zahl stehen und R sich in verschiedenen Wiederholungseinheiten unterscheiden kann, und wobei das hier im Schema (I) gezeigte Produkt für das Polyethercarbonat lediglich so verstanden werden soll, dass sich Blöcke mit der gezeigten Struktur im erhaltenen Polyethercarbonat prinzipiell wiederfinden können, die Reihenfolge, Anzahl und Länge der Blöcke sowie die OH-Funktionalität des Starters aber variieren kann und nicht auf das in Schema (I) gezeigte Polyethercarbonat beschränkt ist. Diese Reaktion (siehe Schema (I)) ist ökologisch sehr vorteilhaft, da sie die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

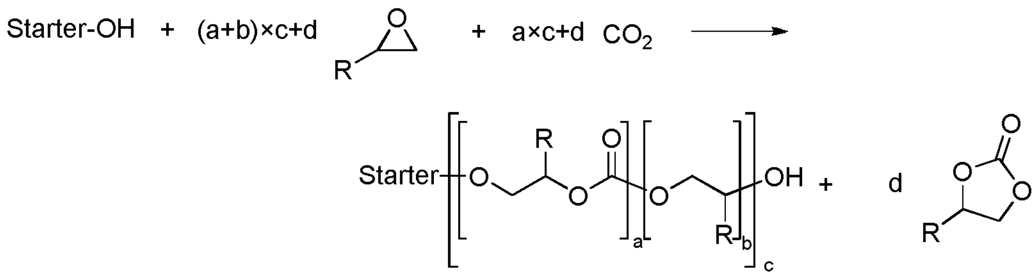

(I)

Block-Copolymere enthaltend Polyoxymethylen-Einheiten neben Polyethercarbonat-Einheiten sind nicht vorbeschrieben.

Es bestand daher die Aufgabe, Polyethercarbonat-Polyoxymethylen-Block-Copolymere bereitzustellen, die mit Isocyanaten reagieren und somit im Polyurethan-Bereich Anwendung finden können.

Erfindungsgemäß gelöst wurde diese Aufgabe durch ein Verfahren zur Herstellung von Polyethercarbonat-Polyoxymethylen-Block-Copolymeren, umfassend den Schritt der Polymerisation von Formaldehyd, wobei die Polymerisation von Formaldehyd in Gegenwart eines Polyethercarbonats mit mindestens einem Zerewitinoff-aktiven H-Atom erfolgt. Hierbei wird ein Polyethercarbonat-Polyoxymethylen-Block-Copolymer erhalten.

Überraschend wurde gefunden, dass die Herstellung der Polyethercarbonat-Einheiten aus Epoxiden, Kohlenstoffdioxid und einer Starterverbindung sowie die Polymerisation von Formaldehyd sukzessive im gleichen Reaktionsgefäß erfolgen kann, ohne dass eine vorherige Aufreinigung des Polyethercarbonat-Zwischenproduktes notwendig ist.

Die erhaltenen Polyethercarbonat-Polyoxymethylen-Block-Copolymere bieten gegenüber existierenden mono-, bi- oder höherfunktionellen Polymeren eine Reihe von Vorteilen. So können bestimmte physikalische Eigenschaften wie Glasübergangstemperaturen, Schmelzbereiche und/oder Viskositäten über die Länge der Polyoxymethylen-Blöcke und der Polyethercarbonat-Blöcke, deren jeweilige Länge im Verhältnis zueinander sowie die Zusammensetzung der Polyethercarbonat-Blöcke, insbesondere deren Carbonat-Gehalt, gezielt angesteuert werden.

Gegenüber Polyoxymethylen-Homopolymeren gleichen Molekulargewichts ist die Teilkristallinität in den erfindungsgemäßen Polyethercarbonat-Polyoxymethylen-Block-Copolymeren typischerweise herabgesetzt, was üblicherweise ebenfalls zu einer Herabsetzung von Glasübergangstemperaturen, Schmelzpunkten und/oder Viskositäten führt. Die Anwesenheit der Polyethercarbonat-Blöcke führt weiterhin typischerweise zu einer Erhöhung der chemischen und thermischen Stabilität. Die thermische Stabilität kann beispielsweise über die Zersetzungstemperatur und/oder den temperaturabhängigen relativen Gewichtsverlust charakterisiert werden. Dies kann beispielsweise über die thermogravimetrische Analyse (TGA) erfolgen, wie im experimentellen Teil beschrieben. So beschreiben beispielsweise eine höhere Zersetzungstemperatur und/oder ein geringerer Gewichtsverlust beim Aufheizen bis zu einer bestimmten Temperatur oder einem bestimmten Temperaturbereich thermisch stabilere Polymere.

Polyoxymethylen-Homopolymere sind typischerweise auf eine Funktionalität $F \leq 2$ beschränkt. Über den Einsatz von Polyethercarbonaten mit einer Funktionalität $F \geq 2$ (beispielsweise > 3) ist im Gegensatz dazu der Zugang zu Polyethercarbonat-Polyoxymethylen-Block-Copolymeren mit einer Funktionalität $F \geq 2$ möglich.

Gegenüber Polyether-Blöcken gleichen Molekulargewichts bieten Polyethercarbonat-Blöcke den Vorteil, dass der Anteil an Polyoxyalkylen-Einheiten, die aus den entsprechenden Alkylenoxiden hergestellt werden, um den Carbonat-Anteil verringert ist. Dieser Austausch von Alkylenoxid-Bausteinen gegen Kohlenstoffdioxid führt einerseits zu einer vorteilhaften Energiebilanz und andererseits einem erhöhten Anteil an erneuerbaren Rohstoffen im Produkt. Der Einbau von Formaldehyd in Form von Polyoxymethylen-Einheiten führt zu einer weiteren Reduktion des Alkylenoxid-Anteils, was zu einer zusätzlichen Verbesserung der Energiebilanz des Produktes führt. Da Formaldehyd aus erneuerbaren Rohstoffen wie z.B. Biomethanol oder $CO_2$ gewonnen werden kann, kann auch hierdurch der Anteil an erneuerbaren Rohstoffen im Produkt heraufgesetzt werden.

Polyethercarbonat-Polyoxymethylen-Block-Copolymere (im Rahmen der Erfindung auch austauschbar als Polyoxymethylen-Polyethercarbonat-Block-Copolymere bezeichnet) im Sinne der Erfindung bezeichnen polymere Verbindungen, die mindestens einen Polyoxymethylen-Block sowie mindestens einen Polyethercarbonat-Block enthalten.

Ein Polyoxymethylen-Block im Sinne der Erfindung bezeichnet eine polymere Struktureinheit $(CH_2O)_x$ mit $x \geq 1$, die mindestens eine an zwei Sauerstoffatome gebundene $CH_2$-Gruppe enthält, welche über mindestens eines der Sauerstoffatome mit weiteren Methylengruppen oder anderen polymeren Strukturen verbunden ist. Bevorzugt enthalten Polyoxymethylen-Blöcke $(CH_2O)_x$ durchschnittlich $x \geq 1$ und $x \leq 500$, mehr bevorzugt durchschnittlich $x \geq 1{,}1$ und $x \leq 150$ und besonders bevorzugt durchschnittlich $x \geq 1{,}5$ und $x \leq 50$ Oxymethylen-Einheiten.

Ein Polyethercarbonat-Block im Sinne der Erfindung bezeichnet eine polymere Struktureinheit $-O[(C_2R^1R^2R^3R^4O)_x(CO_2)(C_2R^1R^2R^3R^4O)_y]_z-$, mit $x \geq 1$, $y \geq 0$ und $z \geq 1$, wobei $R^1$, $R^2$, $R^3$ und $R^4$ unabhängig voneinander Wasserstoff, ein gegebenenfalls zusätzliche Heteroatome wie Stickstoff, Sauerstoff, Silizium, Schwefel oder Phosphor enthaltender Alkyl- oder Arylrest sein und sich in verschiedenen Wiederholungseinheiten unterscheiden können. Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten, die gegebenenfalls mit weiteren Alkylgruppen und/oder Heteroatomen wie Stickstoff, Sauerstoff, Silizium, Schwefel oder Phosphor substituiert sein können. Die Reste $R^1$, $R^2$, $R^3$ und/oder $R^4$ können innerhalb einer Wiederholungseinheit so miteinander verknüpft sein, dass sie zyklische Strukturen ausbilden, wie beispielsweise einen Cycloalkyl-Rest, der über zwei benachbarte Kohlenstoffatome in die Polymerkette eingebaut ist.

Verschiedene Polyoxymethylen- und/oder Polyethercarbonat-Blöcke können direkt oder indirekt über Spacer miteinander verbunden sein. Als Spacer können beispielsweise 1,3-Propandiol, 1,4-Butandiol, Hexamethylendiol, 4-Hydroxybutyrsäure, 4-Hydroxypentansäure, 6-Hydroxyhexansäure, Maleinsäure, Phthalsäure, Glutarsäure, Bisphenol A, Bisphenol F, Trimethylolpropan, Glycerin, Ricinusöl, Pentaerythrit oder Sorbit in ihrer jeweils deprotonierten Form vorliegen.

Formaldehyd kann in gasförmigem Zustand, ggf. als Mischung mit Inertgasen wie z.B. Stickstoff oder Argon oder als Mischung mit gasförmigem, überkritischem oder flüssigem Kohlendioxid, oder als Formaldehyd-Lösung eingesetzt werden. Bei Formaldehyd-Lösungen kann es sich um wässrige Formaldehyd-Lösungen mit einem Formaldehyd-Gehalt zwischen 1 Gew.-% und 37 Gew.-% handeln, die gegebenenfalls bis zu 15 Gew.-% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, *N,N*-Dimethylformamid (DMF), *N,N*-Dimethylacetamid, Dimethylsulfoxid (DMSO), zyklischen Carbonaten, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von Gemischen von gasförmigem Formaldehyd mit Argon, Stickstoff oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, *N,N*-Dimethylformamid (DMF), *N,N*-Dimethylacetamid, Dimethylsulfoxid (DMSO), zyklischen Carbonaten, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander,

und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, hochmolekulares Polyoxymethylen (POM), Dimethylacetal, 1,3-Dioxolan, 1,3-Dioxan und/oder 1,3-Dioxepan, besonders bevorzugt sind 1,3,5-Trioxan und Paraformaldehyd.

Bei den Polyethercarbonaten handelt es sich im Sinne der Erfindung um mono-, bi- oder höherfunktionelle oligomere oder polymere Verbindungen, die beispielsweise aus Epoxiden und Kohlenstoffdioxid als Ausgangsstoffe aufgebaut sein können und Struktureinheiten - $O[(C_2R^1R^2R^3R^4O)_x(CO_2)(C_2R^1R^2R^3R^4O)_y]_z$- enthalten, wobei $x \geq 1$, $y \geq 0$ und $z \geq 1$ und $R^1$, $R^2$, $R^3$ und $R^4$ unabhängig voneinander Wasserstoff, ein gegebenenfalls zusätzliche Heteroatome wie Stickstoff, Sauerstoff, Silizium, Schwefel oder Phosphor enthaltender Alkyl- oder Arylrest sein und sich in verschiedenen Wiederholungseinheiten unterscheiden können. Die Reste $R^1$, $R^2$, $R^3$ und/oder $R^4$ können gegebenenfalls so miteinander verknüpft sein, dass sie zyklische Strukturen ausbilden, wie beispielsweise einen Cycloalkyl-Rest, der über zwei benachbarte Kohlenstoffatome in die Polymerkette eingebaut ist. Die Polyethercarbonate im Sinne der Erfindung können neben den Struktureinheiten -$O[(C_2R^1R^2R^3R^4O)_x(CO_2)(C_2R^1R^2R^3R^4O)_y]_z$- weitere Struktureinheiten enthalten, die bei der Herstellung der Polyethercarbonate als Starterverbindungen eingesetzt wurden. Solche weiteren Struktureinheiten sind beispielsweise bi- oder höherfunktionelle Alkohole wie Ethylenglykol, Diethylenglykol, Propylenglykol, Dipropylenglykol, Glycerin, 1,3-Propandiol, 1,4-Butandiol, Hexamethylendiol, Bisphenol A, Bisphenol F, Trimethylolpropan, Ricinusöl, Pentaerythrit oder Sorbit, Di- oder Polycarbonsäuren wie Maleinsäure, Phthalsäure, Glutarsäure, Hydroxycarbonsäuren wie 4-Hydroxybutyrsäure, 4-Hydroxypentansäure, 6-Hydroxyhexansäure, sowie OH-terminierte Polyether, wie Polyethylenglykol, Polypropylenglykol, gegebenenfalls in ihrer jeweils deprotonierten Form. Vorzugsweise werden die Polyethercarbonate aus den Ausgangsstoffen Starterverbindung, Epoxid und Kohlenstoffdioxid hergestellt.

Die Funktionalität der Polyethercarbonate wird über terminale oder entlang der Polymerkette angeordnete, Heteroatome enthaltende, deprotonierbare funktionelle Gruppen wie beispielsweise Hydroxygruppen, Thiolgruppen, Aminogruppen, Carbonsäuregruppen oder Carbonsäurederivate wie z.B. Amide hergestellt.

Als Lösungsmittel können beispielsweise Wasser, Methanol oder höhere ein- oder mehrwertige Alkohole, unpolare organische Lösungsmittel wie z.B. lineare oder verzweigte Alkane oder AlkanGemische, Toluol, die verschiedenen Xylol-Isomere oder Gemische derselben, Mesitylen, ein oder mehrfach halogenierte Aromaten oder Alkane wie z.B. Chlorbenzol, Dichlorbenzol, Dichlormethan, Dichlorethan oder Tetrachlorethan, offenkettige oder zyklische Ether wie z.B. Tetrahydrofuran (THF) oder Methyl-*tert*-butylether (MTBE), offenkettige oder zyklische Ester, oder polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Auch der Einsatz von flüssigem oder überkritischem Kohlendioxid als Lösungsmittel in Reinsubstanz oder als Gemisch mit einem der oben genannten Lösungsmittel ist möglich. Bevorzugt sind offenkettige oder zyklische Ether wie z.B. Tetrahydrofuran (THF) oder Methyl-*tert*-butylether (MTBE), ein- oder mehrfach chlorierte Aromaten oder Alkane wie z.B. Chlorbenzol, Dichlorbenzol, Dichlormethan, Dichlorethan, Tetrachlorethan, offenkettige oder zyklische Ester, polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander und/oder mit anderen Lösungsmitteln sowie flüssiges oder überkritisches Kohlendioxid. Besonders bevorzugt ist die Reaktion in Abwesenheit von Lösungsmitteln.

Die Reaktion erfolgt durch Polymerisation von Formaldehyd in Gegenwart eines Polyethercarbonats mit mindestens einem Zerewitinoff-aktiven H-Atom. Vorzugsweise weist das Polyethercarbonat mindestens zwei Zerewitinoff-aktive H-Atome auf. Beispiele für Zerewitinoffaktive H-Atome sind solche in OH-, SH-, primären oder sekundären Amino-Gruppen. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert.

Die Reaktion kann im Batch-Verfahren, im Semi-Batch-Verfahren oder im kontinuierlichen Verfahren durchgeführt werden. Im bevorzugten Semi-Batch-Verfahren wird ein Polyethercarbonat, ggf. im Gemisch mit einem Katalysator und/oder einem Lösungsmittel, vorgelegt und Formaldehyd bzw. die Formaldehyd-Quelle in Reinsubstanz als Gas oder Flüssigkeit oder in Lösung der Reaktion zudosiert. Die zudosierte Menge an Formaldehyd bzw. in der Formaldehyd-Quelle enthaltenen Formaldehyd-Äquivalenten wird so gewählt, dass das gewünschte Molekulargewicht erreicht wird.

Im einem alternativen, ebenfalls bevorzugten kontinuierlichen Verfahren wird ein Polyethercarbonat, ggf. im Gemisch mit einem Katalysator und/oder einem Lösungsmittel vorgelegt und Formaldehyd bzw. die Formaldehyd-Quelle

in Reinsubstanz als Gas oder Flüssigkeit oder in Lösung der Reaktion zudosiert. Bei Erreichen des maximalen Füllstandes des Reaktors, wird eine Teilmenge des Reaktionsgemisches kontinuierlich entnommen, während kontinuierlich Polyethercarbonat und ggf. Katalysator und/oder ein Lösungsmittel sowie Formaldehyd bzw. die Formaldehyd-Quelle in Reinsubstanz als Gas oder Flüssigkeit oder in Lösung der Reaktion zudosiert wird. Die Mengenverhältnisse zwischen der kontinuierlich zudosierten Menge an Polyethercarbonat und Formaldehyd bzw. in der Formaldehyd-Quelle enthaltenen Formaldehyd-Äquivalenten werden so gewählt, dass das gewünschte Molekulargewicht erreicht wird.

Die Reaktion wird beispielsweise bei einer Temperatur zwischen 20 und 200 °C, bevorzugt zwischen 20 und 120 °C und besonders bevorzugt zwischen 40 und 120 °C durchgeführt. Bei Verwendung einer Formaldehyd-Quelle, die chemisch gebundenen Formaldehyd enthält, liegt die Reaktionstemperatur oberhalb der unter den gegebenen Bedingungen zur Freisetzung von Formaldehyd oder dessen Einbau in Form von Oxymethylen-Einheiten benötigten Temperatur. Bei Anwesenheit von geeigneten Katalysatoren, die die Freisetzung von Formaldehyd oder dessen Einbau beschleunigen, kann die Reaktionstemperatur unterhalb der für die nicht-katalysierte Freisetzung von Formaldehyd oder dessen Einbau geeigneten Temperatur liegen. Gegebenenfalls können die Katalysatoren für die Herstellung der erfindungsgemäßen Polyethercarbonat-Polyoxymethylen-Block-Copolymere ebenfalls als Katalysatoren für die Freisetzung von Formaldehyd oder dessen Einbau in Form von Oxymethylen-Einheiten fungieren.

Der Druck während der Polymerisation von Formaldehyd bzw. der Formaldehyd-Äquivalente in Anwesenheit des Polyethercarbonats beträgt in der Regel 1 bis 200 bar. Bei der Verwendung von gasförmigem Formaldehyd beträgt der Druck bevorzugt 3 bis 100 bar, besonders bevorzugt 5 bis 50 bar.

Die Reaktionszeit für die Polymerisation beträgt beispielsweise 0,05 bis 120 Stunden, bevorzugt 0,5 bis 48 Stunden, besonders bevorzugt 1 bis 24 Stunden. Als Reaktionszeit wird die Zeitspanne betrachtet, während der sich Formaldehyd und Polyethercarbonat sowie ggf. Katalysator bei Reaktionstemperatur in direktem Kontakt befinden. Insbesondere bei der Durchführung im Semi-Batch-Verfahren, wie z.B. beim Einleiten von gasförmigem Formaldehyd in die Reaktionsmischung, richtet sich die Reaktionszeit nach der zum Erreichen des gewünschten Molekulargewichts benötigten Menge an zudosiertem Formaldehyd bzw. zudosierten Formaldehyd-Äquivalenten.

Ausführungsformen des erfindungsgemäßen Verfahrens werden nachfolgend beschrieben. Sie können beliebig miteinander kombiniert werden, sofern sich aus dem Kontext nicht eindeutig das Gegenteil ergibt.

In einer Ausführungsform des erfindungsgemäßen Verfahrens erfolgt die Polymerisation von Formaldehyd weiterhin in Gegenwart eines Katalysators. Bevorzugt ist der Katalysator ausgewählt aus der Gruppe der basischen Katalysatoren und/oder der Lewis-sauren Katalysatoren. Als Katalysator werden Verbindungen eingesetzt, die die Polymerisation von Formaldehyd katalysieren. Besonders bevorzugt sind Lewis-saure Katalysatoren.

Beispiele für basische Katalysatoren sind tertiäre oder aromatische basische Amine wie z.B. Triethylamin sowie andere Trialkylamine, Pyridin sowie ein- oder mehrfach substituierte PyridinDerivate, *N*-Alkyl- oder *N*-Aryl-imidazol, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-en (TBD), 7-Methyl-1,5,7-triazabicyclo[4.4.0]dec-5-en (MTBD).

Lewis-saure Katalysatoren enthalten als Lewis-saures Zentrum ein oder mehrere koordinativ ungesättigte Metallatome, wie z.B. Metalle der dritten, vierten oder fünften Hauptgruppe, beispielsweise Bor, Aluminium, Zinn, Antimon oder Bismut, Metalle der dritten und vierten Nebengruppe, beispielsweise Scandium, Yttrium, Lanthan, Titan, Zirconium oder Hafnium, sowie Metalle der Reihe der Lanthanoide, Vanadium, Molybdän, Wolfram, Metalle der achten, neunten oder zehnten Nebengruppe, insbesondere Eisen, Kobalt, Nickel, Rhodium, Iridium, Palladium, Platin, Kupfer oder Zink. Das koordinativ ungesättigte Lewis-saure Zentrum zeichnet sich dadurch aus, dass nukleophile Moleküle daran binden können. Das koordinativ ungesättigte Lewis-saure Zentrum kann bereits in der als Katalysator eingesetzten Verbindung vorhanden sein oder bildet sich in der Reaktionsmischung, z.B. durch Abspaltung eines schwach gebundenen nukleophilen Moleküls. Ganz besonders bevorzugt sind Lewis-saure Katalysatoren, die als Lewis-saures Zentrum ein oder mehrere Zink-, Zinn- oder Molybdän-Atome enthalten, wie z.B. Zink-di-2-ethylhexanoat, Dibutylzinndilaurat (DBTL), Dibutylzinnoxid, Zinn-di-2-ethylhexanoat oder Lithiummolybdat. Ebenfalls ganz besonders bevorzugt sind Doppelmetallcyanid-Katalysatoren (DMC-Katalysatoren), die als Lewis-saure Zentren Zink und Kobalt enthalten.

Der Katalysator wird üblicherweise im molaren Verhältnis 1:10 000 bis 10:1, bevorzugt 1:1 000 bis 1:1, besonders bevorzugt 1:1 000 bis 1:10 zu den im Polyethercarbonat enthaltenen funktionellen Gruppen eingesetzt.

Es ist weiterhin möglich, dass die Polymerisation von Formaldehyd in Gegenwart eines Katalysators erfolgt, der identisch ist mit dem Katalysator, der zur Herstellung des Polyethercarbonats verwendet wird. In einer speziellen Ausführungsform ist der zur Herstellung der Polyethercarbonat-Polyoxymethylen-Block-Copolymere verwendete Katalysator identisch mit dem zur Herstellung der Polyethercarbonate verwendeten DMC-Katalysator.

Im erfindungsgemäßen Verfahren sind die Polyoxymethylen-Einheiten entweder direkt oder indirekt über ein oder mehrere Co-Monomere oder Spacer mit den Polyethercarbonaten verknüpft. Auch eine Verknüpfung mehrerer Polyoxymethylen-Einheiten untereinander über ein oder mehrere Co-Monomere ist möglich. Daher erfolgt in einer weiteren Ausführungsform des erfindungsgemäßen Verfahrens die Polymerisation weiterhin in Gegenwart eines Co-Monomers. Als Co-Monomere können beispielsweise zyklische Ether, insbesondere Epoxide wie z.B. Ethylenoxid, Propylenoxid, Cyclohexenoxid oder Styroloxid, Oxetan, THF, Dioxan, zyklische Acetale wie z.B. 1,3-Dioxolan oder 1,3-Dioxepan, zyklische Ester wie z.B. γ-Butyrolacton, γ-Valerolacton, ε-Caprolacton, oder zyklische Säureanhydride wie z.B. Maleinsäureanhydrid oder Phthalsäureanhydrid, bzw. Gemische aus zwei oder mehreren der vorgenannten Co-Monomere in beliebiger Zusammensetzung zum Einsatz kommen. Bevorzugte Co-Monomere sind Epoxide, zyklische Acetale und zyklische Ester, besonders bevorzugte Co-Monomere sind Ethylenoxid, Propylenoxid, 1,3-Dioxolan, 1,3-Dioxepan und ε-Caprolacton.

Die Dosierung der Co-Monomere kann in Reinsubstanz oder in Lösung erfolgen. In einer alternativen Ausführungsform erfolgt die Dosierung der Co-Monomere im Gemisch mit Formaldehyd bzw. der Formaldehyd-Quelle. Die Dosierung der Co-Monomere kann vor der Dosierung, parallel zu der Dosierung oder im Anschluss an die Dosierung von Formaldehyd bzw. der Formaldehyd-Quelle erfolgen.

In einer speziellen Ausführungsform sind die Co-Monomere zumindest teilweise identisch mit den zur Herstellung der Polyethercarbonate verwendeten Epoxiden.

In einer weiteren Ausführungsform des erfindungsgemäßen Verfahrens wird das Formaldehyd als gasförmiges Formaldehyd in das Reaktionsgefäß eingetragen.

In einer speziellen Ausführungsform wird das zur Herstellung der Polyethercarbonat-Polyoxymethylen-Block-Copolymere verwendete Polyethercarbonat hergestellt durch Reaktion einer aktive Wasserstoffatome aufweisenden Starterverbindung mit Kohlendioxid und mit mindestens einem Epoxid (Alkylenoxid), wobei die Reaktion in Gegenwart eines Doppelmetallcyanid-Katalysators (DMC-Katalysators) durchgeführt wird und wobei vorzugsweise das Rohprodukt dieser Reaktion mit Ausnahme eines möglichen Destillationsschrittes keine weitere Aufreinigung erfährt.

Als aktive Wasserstoffatome aufweisende Starterverbindungen für die Herstellung der Polyethercarbonate (auch als H-funktionelle Startersubstanz bezeichnet) werden vorzugsweise Verbindungen mit (zahlenmittleren) Molekulargewichten von ≥ 18 g/mol bis ≤ 2000 g/mol, bevorzugt ≥ 62 g/mol bis ≤ 2000 g/mol und mit einer Anzahl an Hydroxylgruppen pro Molekül von ≥ 1 bis ≤ 8, bevorzugt ≥ 2 bis ≤ 4 eingesetzt. Beispiele hierfür sind Ethylenglykol, Diethylenglykol, Triethylenglykol, 1,2-Propylenglykol, Dipropylenglykol, 1,4-Butandiol, Hexamethylenglykol, Bisphenol A, Bisphenol F, Trimethylolpropan, Glycerin, Ricinusöl, Pentaerythrit, Sorbit, Rohrzucker, abgebaute Stärke und/oder Wasser.

Besonders bevorzugt werden als H-funktionelle Startersubstanzen (Starterverbindungen) solche Verbindungen mit zahlenmittleren Molekulargewichten von ≥ 450 g/mol bis ≤ 2000 g/mol oder eine Mischung aus a) Verbindungen mit zahlenmittleren Molekulargewichten von ≥ 62 g/mol bis < 450 g/mol (im Folgenden auch als "niedermolekulare Starterverbindung" bezeichnet) und b) Verbindungen mit zahlenmittleren Molekulargewichten von ≥ 450 g/mol bis ≤ 2000 g/mol (im Folgenden auch als "Starterpolyole" bezeichnet) eingesetzt, die vorzugsweise jeweils > 1 bis ≤ 8, bevorzugt ≥ 2 bis ≤ 5 Hydroxylgruppen enthalten.

Beispiele für niedermolekulare Starterverbindungen sind Ethylenglykol, Diethylenglykol, Triethylenglykol, 1,2-Propylenglykol, Dipropylenglykol, 1,4-Butandiol, Hexamethylenglykol, Bisphenol A, Bisphenol F, Trimethylolpropan, Glycerin, Ricinusöl, Pentaerythrit, Sorbit und/oder Rohrzucker. Beispiele für Starterpolyole sind zum Beispiel Polyetherpolyole, die beispielsweise aus den zuvor genannten niedermolekularen Starterverbindungen und Epoxiden hergestellt wurden, oder Poly(oxyalkylen)carbonat-Polyole, die beispielsweise aus den zuvor genannten Starterverbindungen, Epoxiden und $CO_2$ hergestellt wurden, wobei diese Starterpolyole jeweils zahlenmittlere Molekulargewichte von ≥ 450 g/mol bis ≤ 2000 g/mol aufweisen.

Als Epoxid (Alkylenoxid) werden für die Herstellung der Polyethercarbonate Verbindungen der allgemeinen Formel (I):

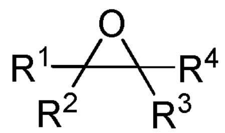

(I)

eingesetzt, wobei $R^1$, $R^2$, $R^3$ und $R^4$ unabhängig voneinander für Wasserstoff oder einen gegebenenfalls zusätzliche Heteroatome wie Stickstoff, Sauerstoff, Silizium, Schwefel oder Phosphor enthaltenden Alkyl- oder Arylrest stehen und ggf. so miteinander verknüpft sein können, dass sie zyklische Strukturen ausbilden, wie beispielsweise ein Cycloalkylenoxid.

Es ist möglich, dass auch Mischungen verschiedener Epoxide im erfindungsgemäßen Verfahren eingesetzt werden können, solange die Bestandteile der Epoxidmischung alle unter die allgemeine Formel (I) fallen. Bei Verwendung von Mischungen verschiedener Epoxide ist es auch möglich, das Mischungsverhältnis der Epoxide während der Dosierung stufenweise oder kontinuierlich zu verändern. Allgemein können für das erfindungsgemäße Verfahren Epoxide mit

2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Phenylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan und 3-Glycidyloxypropyltrisopropoxysilan. Vorzugsweise ist das Epoxid der allgemeinen Formel (I) ein terminales Epoxid, wobei $R^1$, $R^2$ und $R^3$ für Wasserstoff stehen, und $R^4$ Wasserstoff, ein gegebenenfalls zusätzliche Heteroatome wie Stickstoff, Sauerstoff, Silizium, Schwefel oder Phosphor enthaltender Alkyl- oder Arylrest sein kann und sich in verschiedenen Wiederholungseinheiten unterscheiden kann. Besonders bevorzugt werden als Alkylenoxide $\geq$ 0 Gewichts-% bis $\leq$ 30 Gewichts-% (bezogen auf die Gesamtmenge des eingesetzten Epoxids (I)) Ethylenoxid und/oder $\geq$ 30 Gewichts-% bis $\leq$ 100 Gewichts-% (bezogen auf die Gesamtmenge des eingesetzten Epoxids (I)) Propylenoxid, besonders bevorzugt reines Propylenoxid eingesetzt.

Die für die Herstellung der Polyethercarbonate geeigneten Doppelmetallcyanid-Katalysatoren (DMC-Katalysatoren) sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Es ist auch möglich, die in EP Anmeldenummer 10163170.3 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Ob^{2+}$ und, $Cu^{2+}$, bevorzugt ist M $Zn^{2+}$, $Fe^{2+}$, $Co^{2+}$ oder $Ni^{2+}$,

X ein oder mehrere (d.h. verschiedene) Anionen bezeichnet, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n = 1, wenn X = Sulfat, Carbonat oder Oxalat ist und

n = 2, wenn X = Halogenid, Hydroxid, Cyanat, Thiocyanat, Isocyanat, Isothiocyanat oder Nitrat ist, oder geeignete cyanidfreie Metallsalze besitzen die allgemeine Formel (III),

$$M_r(X)_3 \qquad (III)$$

wobei

M ausgewählt ist aus den Metallkationen $Fe^{3+}$, $Al^{3+}$ und $Cr^{3+}$,

X ein oder mehrere (d.h. verschiedene) Anionen bezeichnet, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r = 2, wenn X = Sulfat, Carbonat oder Oxalate ist und

r = 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (IV),

$M(X)_s$ (IV)

wobei

M ausgewählt ist aus den Metallkationen $Mo^{4+}$, $V^{4+}$ und $W^{4+}$

X ein oder mehrere (d.h. verschiedene) Anionen bezeichnet, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s = 2, wenn X = Sulfat, Carbonat oder Oxalat ist und

s = 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (V),

$M(X)_t$ (V)

wobei

M ausgewählt ist aus den Metallkationen $Mo^{6+}$ und $W^{6+}$

X ein oder mehrere (d.h. verschiedene) Anionen bezeichnet, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t = 3, wenn X = Sulfat, Carbonat oder Oxalat ist und

t = 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$(Y)_a M'(CN)_b (A)_c$ (VI)

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),

A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c ganzzahlige Zahlen sind, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt

den Wert 0.

Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VII)

$$M_x[M'_{x'}(CN)_y]_z \qquad (VII),$$

worin M wie in Formel (II) bis (V) und

M' wie in Formel (VI) definiert ist, und

x, x', y und z ganzzahlig sind und so gewählt, dass die Elektronenneutralität der Doppelmetallcyanidverbindung gegeben ist.

Vorzugsweise ist

x = 3, x' = 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086 offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykolmono-methylether und 3-Methyl-3-oxetan-methanol). Höchst bevorzugte organische Komplexliganden sind ausgewählt aus einer oder mehreren Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei Drücken von im allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Der DMC-Katalysator kann beispielsweise in einem Anteil, bezogen auf die Gesamtmasse von eingesetzter Starterverbindung und Epoxid (I), von ≥ 1 ppm bis ≤ 1000 ppm und vorzugsweise von ≥ 10 ppm bis ≤ 500 ppm eingesetzt werden.

Zur Herstellung der Polyethercarbonate kann die Dosierung eines oder mehrerer Epoxide und des Kohlendioxids simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Epoxide erfolgt simultan oder sequentiell zur Kohlendioxid-Dosierung. Werden mehrere Epoxide zur Synthese der Polyethercarbonate eingesetzt, so kann deren Dosierung simultan oder sequentiell über jeweils separate Dosierungen erfolgen oder über eine oder mehrere Dosierungen, wobei mindestens zwei Epoxide als Gemisch dosiert werden. Über die Art der Dosierung der Epoxide und des Kohlendioxids ist es möglich, statistische, alternierende, blockartige oder gradientenartige Polyethercarbonate zu synthetisieren. Die Konzentration an freien Epoxiden während der Reaktion in der Reaktionsmischung beträgt vorzugsweise > 0 bis ≤ 40 Gew.-%, besonders bevorzugt > 0 bis ≤ 25 Gew-%, höchst bevorzugt > 0 bis ≤ 15 Gew.-% (jeweils bezogen auf das Gewicht der Reaktionsmischung).

Vorzugsweise wird ein Überschuss an Kohlendioxid bezogen auf die berechnete Menge an eingebautem Kohlendioxid im Polyethercarbonat eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonate als vorteilhaft erwiesen. Es hat sich weiterhin gezeigt, dass die Copolymerisation zur Herstellung der Polyethercarbonate vorteilhafterweise bei 50 bis 150 °C, bevorzugt bei 60 bis 145 °C, besonders bevorzugt bei 70 bis 140 °C und ganz besonders bevorzugt bei 90 bis 130 °C durchgeführt wird. Werden Temperaturen unterhalb von 50 °C eingestellt, kommt die Reaktion zum Erliegen. Bei Temperaturen oberhalb von 150 °C steigt die Menge an unerwünschten Nebenprodukten stark an. Weiterhin ist zu beachten, dass das $CO_2$ bei der Wahl von Druck und Temperatur vom gasförmigen Zustand möglichst in den flüssigen und/oder überkritischen flüssigen Zustand übergeht. $CO_2$ kann jedoch auch als Feststoff in den Reaktor gegeben werden und dann unter den gewählten Reaktionsbedingungen in den flüssigen und/oder überkritischen flüssigen Zustand übergehen.

In einer weiteren Ausführungsform (im Folgenden auch als "Semi-batch Anwendung" bezeichnet) werden bei der Herstellung der Polyethercarbonate ein oder mehrere Starterpolyole, Kohlendioxid und der DMC-Katalysator im Reaktorsystem vorgelegt und eine oder mehrere niedermolekulare Starterverbindungen werden kontinuierlich gemeinsam mit einem oder mehreren Alkylenoxiden zugeführt. Hierbei entspricht die Summe der eingesetzten Mengen an

Starterpolyolen und niedermolekularen Starterverbindungen der Gesamtmenge an eingesetzten Starterverbindungen. Vorzugsweise wird die Dosierung der niedermolekularen Starterverbindungen und die eines oder mehrerer Alkylenoxide gleichzeitig beendet, oder die niedermolekularen Starterverbindungen und eine erste Teilmenge an einem oder mehreren Alkylenoxiden werden zunächst gemeinsam zudosiert und anschließend die zweite Teilmenge an einem oder mehreren Alkylenoxiden zudosiert, wobei die Summe der ersten und zweiten Teilmenge an einem oder mehreren Alkylenoxiden der Gesamtmenge der eingesetzten Menge an einem oder mehreren Alkylenoxiden entspricht. Die erste Teilmenge beträgt 60 bis 90 Gew.-% und die zweite Teilmenge beträgt 40 bis 10 Gew.-% der eingesetzten Gesamtmenge an Alkylenoxid. Die Menge der Starterverbindungen, die während der Herstellung des Polyethercarbonats kontinuierlich in den Reaktor zudosiert werden, beträgt bevorzugt mindestens 20 mol% Äquivalente, besonders bevorzugt 70 bis 95 mol% Äquivalente (jeweils bezogen auf die gesamte Menge an Starterverbindungen).

Nach der Zudosierung der zur Herstellung der Polyethercarbonate eingesetzten Einsatzstoffe kann sich eine Nachreaktionsphase anschließen, in der der Verbrauch an Alkylenoxid durch Überwachung des Drucks quantifiziert werden kann. Nach Erreichen von Druckkonstanz kann die Polymerisation mit Formaldehyd (gegebenenfalls nach Anlegen von Vakuum oder durch Strippen zur Entfernung von nicht umgesetzen Alkylenoxiden), gegebenenfalls nach Zugabe eines weiteren Katalysators, gestartet werden.

Bei der Herstellung der Polyethercarbonate sollte aus Sicherheitsgründen der Gehalt an freiem Epoxid (Alkylenoxid) 15 Gew.-% im Reaktionsgemisch des Rührkessels nicht übersteigen (siehe beispielsweise WO-A 2004/081082; Seite 3; Zeile 14). Bei der Herstellung der Polyethercarbonate in der Semi-batch Anwendung wie auch in der kontinuierlichen Anwendung sollte daher die Dosiergeschwindigkeit des Epoxids entsprechend eingestellt werden, so dass das Epoxid genügend schnell abreagiert und durch die Zudosierung von Epoxid der Gehalt an freiem Epoxid 15 Gew.-% im Reaktionsgemisch des Rührkessels nicht übersteigt. Es ist möglich, das Kohlendioxid kontinuierlich oder diskontinuierlich zuzuführen. Der Druck des Kohlendioxids kann bei der Copolymerisation variieren. Es ist möglich, während der Zugabe des Epoxids den $CO_2$-Druck allmählich zu steigern oder zu senken oder konstant zu halten. Auch kann ein Teil der Zugabe des Epoxids in Abwesenheit von $CO_2$ erfolgen, um beispielsweise einen Teilabschnitt des entstehenden Copolymers aus reinem Epoxid aufzubauen.

Der Herstellung der Polyethercarbonate können Aktivierungsschritte (in An- oder Abwesenheit von Kohlendioxid) zur Aktivierung des eingesetzten DMC-Katalysators vorausgehen. Bei Durchführung der Copolymerisation in einem Rührkessel kann der vorgelagerte Schritt zur Aktivierung des DMC-Katalysators beispielsweise im Rührkessel erfolgen, der anschließend zur Copolymerisation eingesetzt wird, oder alternativ in einem vorgeschalteten Reaktor erfolgen, der selbst wiederum ein Rührkessel oder ein Rohrreaktor sein kann.

Als Aktivierungsschritt des DMC-Katalysators wird ein Schritt bezeichnet, bei dem eine Teilmenge des Epoxids (I), gegebenenfalls in Gegenwart von $CO_2$, zum DMC-Katalysator gegeben wird und dann die Zugabe des Epoxids unterbrochen wird, wobei aufgrund einer folgenden exothermen chemischen Reaktion eine Temperaturspitze ("Hotspot") und/oder ein Druckabfall im Reaktor (bei Durchführung im Rührkessel) beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Hotspot. Im Allgemeinen kann dem Aktivierungsschritt ein Schritt zum Trocknen des DMC-Katalysators und ggf. der H-funktionellen Starterverbindung durch erhöhte Temperatur und/oder reduziertem Druck vorgelagert sein, wobei dieser Schritt der Trocknung nicht Teil des Aktivierungsschrittes im Sinne der vorliegenden Erfindung ist.

In einer Ausführungsform des erfindungsgemäßen Verfahrens ist die für die Synthese der Polyethercarbonate eingesetzte Starterverbindung ein Poly(oxyalkylen)-Polyol (d.h. ein Polyetherpolyol) oder ein Poly(oxyalkylen)carbonat-Polyol (d.h. ein Produkt erhältlich ausgehend von einer H-funktionellen Starterverbindung durch Copolymerisation von Kohlendioxid mit Epoxid), jeweils mit einer durchschnittlichen Funktionalität von $\geq 2{,}0$ bis $\leq 5{,}0$, einem Zahlenmittel der Molekülmasse von $\geq 450$ g/mol bis $\leq 1000$ g/mol. Die durchschnittliche Funktionalität kann auch $\geq 2{,}3$ bis $\leq 4{,}0$ betragen. Diese Poly(oxyalkylen)-Polyole und Poly(oxyalkylen)carbonat-Polyole können auch eine OH-Zahl von 200 mg KOH/g bis $\leq 300$ mg KOH/g aufweisen. Die OH-Zahl lässt sich anhand der Norm DIN 53240 bestimmen.

In einer weiteren Ausführungsform des erfindungsgemäßen Verfahrens sind in dem Epoxid der allgemeinen Formel (I) $R^1$, $R^2$ und $R^3$ Wasserstoff und $R^4$ Wasserstoff, Methyl, Ethyl, n-Propyl, iso-Propyl, n-Butyl, sec-Butyl, iso-Butyl, tert-Butyl, Cyclohexyl und/oder Phenyl. Bevorzugt ist hierbei, dass $R^4$ Methyl ist. Dann ist das eingesetzte Epoxid Propylenoxid. Ebenfalls bevorzugt sind Mischungen von Propylenoxid und Ethylenoxid, so dass gemischte Polyetherblöcke erhalten werden. Es können auch nacheinander mehrere Mischungen von Propylenoxid und Ethylenoxid mit unterschiedlichen Mischungsverhältnissen eingesetzt werden.

In einer weiteren Ausführungsform des erfindungsgemäßen Verfahrens umfasst der Doppelmetallcyanid-Katalysator Zink, Kobalt und tert.-Butanol. Vorzugsweise umfasst dieser Katalysator zusätzlich > 5 Gewichts-% bis $\leq 80$ Gewichts-%, bezogen auf die Katalysatormenge, eines Polyethers mit einem Zahlenmittel der Molekülmasse von $\geq 500$ g/mol. Der Anteil des Polyethers kann auch $\geq 10$ Gewichts-% bis $\leq 70$ Gewichts-% und besonders bevorzugt $\geq 15$ Gewichts-% bis $\leq 60$ Gewichts-% betragen. Besonders geeignete Polyether sind beispielsweise Polyetherpolyole mit einer durchschnittlichen OH-Funktionalität von 2 bis 8 und einem Zahlenmittel der Molekülmasse von $\geq 1000$ g/mol bis

≤ 10000 g/mol und vorzugsweise von ≥ 1000 g/mol bis ≤ 5000 g/mol. Als Beispiel genannt seien Poly(oxypropylen)polyole, insbesondere Diole und/oder Triole mit einem Zahlenmittel der Molekülmasse von ≥ 1000 g/mol bis ≤ 4000 g/mol.

In einer weiteren Ausführungsform wird das zur Herstellung der Polyethercarbonat-Polyoxymethylen-Block-Copolymere verwendete Polyethercarbonat (gegebenenfalls unmittelbar) vor der Polymerisation des Formaldehyds im gleichen Reaktionsgefäß hergestellt und ohne Aufreinigungsschritte (ausgenommen gegebenenfalls einer destillativen Entfernung flüchtiger Komponenten) umgesetzt.

Vorzugsweise wird das zur Herstellung der Polyethercarbonat-Polyoxymethylen-Block-Copolymere verwendete Polyethercarbonat aus den Ausgangsstoffen Starterverbindung, Epoxid und Kohlenstoffdioxid hergestellt.

In einer weiteren Ausführungsform wird das bei der Herstellung der Polyethercarbonat-Polyoxymethylen-Block-Copolymere erhaltene Produktgemisch (optional ohne weitere Aufreinigungsschritte) mit zyklischen Carbon- und/oder Kohlensäureestern (zu Hydroxy-funktionalisierten Polyethercarbonat-Polyoxymethylen-Block-Copolymeren) umgesetzt. Die weitere Umsetzung kann direkt in dem vorliegenden Reaktor (*in situ*) oder einem zweiten Reaktor ohne vorherige Isolierung der Polyethercarbonat-Polyoxymethylen-Block-Copolymere erfolgen. Alternativ kann das Reaktionsgemisch zeitlich versetzt, z.B. nach Umfüllen oder Lagerung, für die weitere Umsetzung verwendet werden. Bevorzugt werden für die weitere Umsetzung Produktgemische eingesetzt, bei denen die Polyethercarbonat-Polyoxymethylen-Block-Copolymere in Abwesenheit von Lösungsmitteln erhalten wurden.

Beispiele für zyklische Kohlensäureester sind zyklische Carbonate der Formel (XI),

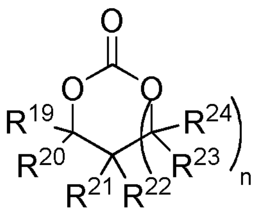

(XI)

wobei

$R^{19}$, $R^{20}$, $R^{21}$, $R^{22}$ , $R^{23}$ und $R^{24}$ unabhängig voneinander für Wasserstoff, einen linearen oder verzweigen, gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls Heteroatome enthaltenden, gegebenenfalls ein oder mehrfach substituierten C6 bis C18 Arylrest stehen oder Glieder eines gesättigten oder ungesättigten, gegebenenfalls Heteroatome enthaltenden 4 bis 7 gliedrigen Rings oder polyzyklischen Systems sein können,

n eine ganze Zahl größer gleich 0, bevorzugt 0, 1, 2 oder 3 ist,

und $R^{23}$ und $R^{24}$ in Wiederholungseinheiten (n > 1) jeweils unterschiedlich sein können,

wobei die Verbindungen der Formel (XI) auch durch Chlor, Brom, Nitrogruppen oder Alkoxygruppen substituiert sein können.

Bevorzugte Verbindungen der Formel (XI) sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat, Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on, 5,5-Dipropyl-1,3-dioxan-2-on.

Besonders bevorzugt sind Propylencarbonat, Trimethylencarbonat und Neopentylglykolcarbonat.

In einer speziellen Ausführungsform sind die zyklischen Carbonate mit den Co-Monomeren zumindest teilweise identisch.

Beispiele für zyklische Carbonsäureester sind aliphatische oder aromatische Lactone enthaltend eine Esterbindung im Ring, vorzugsweise Verbindungen der Formeln (XII), (XIII) oder (XIV),

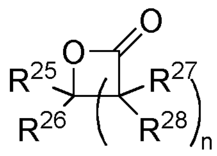
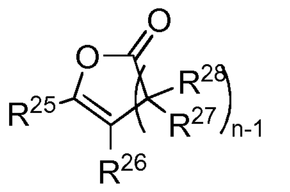
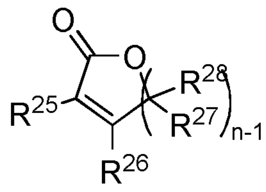

(XII) (XIII) (XIV)

wobei

$R^{25}$ , $R^{26}$ , $R^{27}$ und $R^{28}$ unabhängig voneinander für Wasserstoff, einen linearen oder verzweigen, gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls einfach oder mehrfach substituierten, gegebenenfalls Heteroatome enthaltenden C6 bis C18 Arylrest stehen oder Glieder eines gesättigten oder ungesättigten, gegebenenfalls Heteroatome enthaltenen 4 bis 7 gliedrigen Rings oder polyzyklischen Systems sein können,

wobei die Verbindungen der Formel XII auch durch Chlor, Brom, Nitrogruppen oder Alkoxygruppen substituiert sein können,

n eine ganze Zahl größer gleich 1, bevorzugt 1, 2, 3 oder 4 ist,

und $R^{27}$ und $R^{28}$ in Wiederholungseinheiten (n > 1) jeweils unterschiedlich sein können.

Bevorzugte Verbindungen der Formeln (XII), (XIII) oder (XIV) sind
4-gliedrige Ringlactone wie ß-Propiolacton, ß-Butyrolacton, ß-Isovalerolacton, ß-Caprolacton, β-Isocaprolacton, ß-Methyl-ß-valerolacton,
5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1 (3H)-on,
6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,
7-gliedrige Ringlactone, wie ε-Caprolacton, p-Dioxanon und 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobutyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on,
höhergliedrige Ringlactone, wie (7*E*)-Oxacycloheptadec-7-en-2-on.

Besonders bevorzugt ist ε-Caprolacton und Dihydrocumarin.

In einer speziellen Ausführungsform sind die aliphatischen oder aromatischen Lactone mit den Co-Monomeren zumindest teilweise identisch.

Weitere Beispiele für zyklische Carbonsäureester sind Lactide enthaltend zwei oder mehr Esterbindungen im Ring, vorzugsweise Verbindungen der Formel (XV),

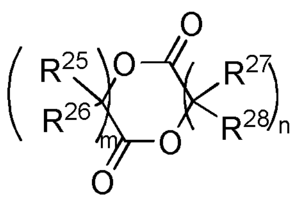

(XV)

wobei $R^{25}$, $R^{26}$, $R^{27}$ und $R^{28}$ die oben genannte Bedeutung haben,

und m und n unabhängig voneinander eine ganze Zahl größer gleich 1, bevorzugt 1, 2, 3 oder 4 ist,

und $R^{25}$ und $R^{26}$ in Wiederholungseinheiten (m>1) und $R^{27}$ und $R^{28}$ in Wiederholungseinheiten (n > 1) jeweils unterschiedlich sein können.

Bevorzugte Verbindungen der Formeln (XV) sind
Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Methyl-6-(prop-2-en-1-yl)-1,4-dioxane-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen).

Besonders bevorzugt ist L-Lactid.

In einer speziellen Ausführungsform sind die Lactide mit den weiteren Comonomeren zumindest teilweise identisch.

In einer weiteren Ausführungsform wird das bei der Herstellung der Polyethercarbonat-Polyoxymethylen-Block-Copolymere oder nach der weiteren Umsetzung mit zyklischen Carbonsäure- oder Kohlensäureestern erhaltene Produktgemisch (optional ohne weitere Aufreinigungsschritte) durch Reaktion mit zyklischen Anhydriden zu Carbonsäurefunktionalisierten Polyethercarbonat-Polyoxymethylen-Block-Copolymeren umgesetzt. Die weitere Umsetzung kann direkt in dem vorliegenden Reaktor (*in situ*) oder einem zweiten Reaktor ohne vorherige Isolierung der Polyethercarbonat-Polyoxymethylen-Block-Copolymere erfolgen. Alternativ kann das Reaktionsgemisch zeitlich versetzt, z.B. nach Umfüllen oder Lagerung, für die weitere Umsetzung verwendet werden. Bevorzugt werden für die weitere Umsetzung Produktgemische eingesetzt, bei denen die Polyethercarbonat-Polyoxymethylen-Block-Copolymere in Abwesenheit von Lösungsmitteln erhalten wurden.

Als zyklische Anhydride werden vorzugsweise Verbindungen der Formel (VIII), (IX) oder (X) eingesetzt,

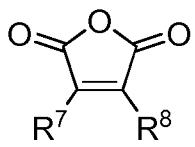

(VIII)

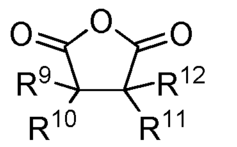

(IX)

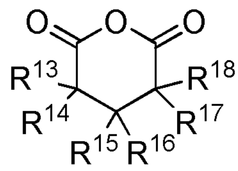

(X)

wobei

$R^7$ und $R^8$ für Wasserstoff, Halogen, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder $R^7$ und $R^8$ Glieder eines gesättigten oder ungesättigten, gegebenenfalls Heteroatome enthaltenden 4 bis 7 gliedrigen Rings oder polyzyklischen Systems sein können, vorzugsweise $R^7$ und $R^8$ gemeinsam einen Benzolring ergeben,

$R^9$, $R^{10}$, $R^{11}$ und $R^{12}$ für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polyzyklischen Systems sein können und

$R^{13}$, $R^{14}$, $R^{15}$, $R^{16}$, $R^{17}$ und $R^{18}$ für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polyzyklischen Systems sein können,

wobei die Verbindungen der Formel (VIII) und (IX) und (X) auch durch Chlor, Brom, Nitrogruppen oder Alkoxygruppen substituiert sein können.

Bevorzugte Verbindungen der Formel (VIII), (IX) oder (X) sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, und Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid, 3[(2E)-But-2-en-1-yl]dihydrofuran-2,5-dion. Besonders bevorzugt sind Succinsäureanhydrid, Maleinsäureanhydrid, Glutarsäureanhydrid und Phthalsäureanhydrid.

In einer speziellen Ausführungsform sind die zyklischen Anhydride mit den Co-Monomeren zumindest teilweise identisch.

In einer weiteren Ausführungsform wird das bei der Herstellung der Polyethercarbonat-Polyoxymethylen-Block-Copolymere oder nach der weiteren Umsetzung mit zyklischen Carbonsäure- oder Kohlensäureestern und/oder zyklischen Anhydriden erhaltene Produktgemisch (optional ohne weitere Aufreinigungsschritte) durch Reaktion mit Epoxiden (vorzugsweise gemäß der obenstehend beschriebenen Formel (I)) zu Hydroxy-funktionalisierten Polyethercarbonat-Polyoxymethylen-Block-Copolymeren umgesetzt. Auf diese Weise kann jedes der erhaltenen Block-Copolymere (mit oder ohne zusätzliche Endgruppe) mit Epoxiden umgesetzt werden. Die weitere Umsetzung kann direkt in dem vorliegenden Reaktor (*in situ*) oder einem zweiten Reaktor ohne vorherige Isolierung der Polyethercarbonat-Polyoxymethylen-Block-Copolymere erfolgen. Alternativ kann das Reaktionsgemisch zeitlich versetzt, z.B. nach Umfüllen oder Lagerung, für die weitere Umsetzung verwendet werden. Bevorzugt werden für die weitere Umsetzung Produktgemische eingesetzt, bei denen die Polyethercarbonat-Polyoxymethylen-Block-Copolymere in Abwesenheit von Lösungsmitteln erhalten wurden. Für die weitere Umsetzung mit Epoxiden können dem Gemisch weitere Additive, die beispielsweise die Umsetzung von Carboxygruppen mit Epoxiden katalysieren, zugesetzt werden. Geeignete Additive sind beispielsweise Tetraalkylammoniunhalogenide $NR_4X$, wobei R für einen Alkylrest steht und verschiedene Substituenten R sich voneinander unterscheiden können, und X für ein Halogenid-Anion der Reihe Fluor, Chlor, Brom, Iod steht, Amine, insbesondere tertiäre Amine wie z.B. Triethylamin oder DABCO, DMAP, DBU, TBD, MTBD, Imidazol oder *N*-alkylierte Imidazole wie z.B. *N*-Methylimidazol oder Trialkyl- bzw. Triarylphosphine, inbesondere Triphenylphosphin.

In einer weiteren Ausführungsform umfasst das Verfahren weiterhin den Schritt der Reaktion des bei der Herstellung der Polyethercarbonat-Polyoxymethylen-Block-Copolymere oder nach der weiteren Umsetzung mit zyklischen Carbonsäure- oder Kohlensäureestern und/oder zyklischen Anhydriden und/oder Epoxiden erhaltenen Produktgemisches (optional ohne weitere Aufreinigungsschritte) mit Isocyanaten. Die weitere Umsetzung kann direkt in dem vorliegenden Reaktor (*in situ*) oder einem zweiten Reaktor ohne vorherige Isolierung der Polyethercarbonat-Polyoxymethylen-Block-Copolymere erfolgen. Alternativ kann das Reaktionsgemisch zeitlich versetzt, z.B. nach Umfüllen oder Lagerung, für die weitere Umsetzung verwendet werden. Bevorzugt werden für die weitere Umsetzung Produktgemische eingesetzt, bei denen die Polyethercarbonat-Polyoxymethylen-Block-Copolymere in Abwesenheit von Lösungsmitteln erhalten wurden.

In einer weiteren Ausführungsform des erfindungsgemäßen Verfahrens ist das Isocyanat ein aliphatisches oder aromatisches Di- oder Polyisocyanat und das erhaltene Produkt ist ein Polyurethan oder ein Polyamid. Beispiele für aliphatische oder aromatische Di- oder Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-l,8-octandiisocyanat (Nonantriisocyanat) oder Triphenylmethan-4,4',4''-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Bei der Herstellung der erfindungsgemäßen Polyethercarbonat-Polyoxymethylen-Block-Copolymere in Anwesenheit von Lösungsmitteln kann vor jedem weiteren Umsetzungsschritt eine Entfernung der flüchtigen Komponenten, z.B. durch Vakuumdestillation, erfolgen. Zusätzliche Reinigungsschritte wie z.B. Extraktion oder Fällung, z.B. zum Entfernen des Katalysators, sind ebenfalls eingeschlossen.

Selbstverständlich betrifft die Erfindung gemäß einem erfindungsgemäßen Verfahren herstellbare Polyethercarbonat-Polyoxymethylen-Block-Copolymere.

In einer Ausführungsform weisen die Polyethercarbonat-Polyoxymethylen-Block-Copolymere ein zahlenmittleres Molekulargewicht von ≤ 15 000 g/mol, bevorzugt ≤ 7 500 g/mol, besonders bevorzugt ≤ 5 000 g/mol auf. Das zahlenmittlere Molekulargewicht kann beispielsweise per GPC gegen Polypropylenglykol-Standards, oder, abhängig von der Art der Endgruppe, über die OH-Zahl oder Säurezahl oder NMR-spektroskopisch bestimmt werden, wie im experimentellen Teil beschrieben.

In einer weiteren Ausführungsform weisen die Polyethercarbonat-Polyoxymethylen-Block-Copolymere eine Viskosität bei 20 °C von ≤ 50 000 mPa·s, bevorzugt von ≤ 20 000 mPa·s, besonders bevorzugt von ≤ 5 000 mPa·s auf. Die Bestimmung der Viskosität wird im experimentellen Teil beschrieben.

Die nach dem erfindungsgemäßen Verfahren erhältlichen Polyethercarbonat-Polyoxymethylen-Block-Copolymere weisen einen geringen Gehalt an Nebenprodukten auf und können problemlos verarbeitet werden, insbesondere durch Umsetzung mit Kettenverlängerern zu Polyurethanen. Für Polyurethananwendungen werden vorzugsweise Polyethercarbonat-Polyoxymethylen-Block-Copolymere mit einer Funktionalität von mindestens 2 eingesetzt. Des weiteren können die nach dem erfindungsgemäßen Verfahren erhältlichen Polyethercarbonat-Polyoxymethylen-Block-Copolymere in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden.

Die Erfindung betrifft daher ebenfalls die Verwendung von erfindungsgemäßen Polyethercarbonat-Polyoxymethylen-Block-Copolymeren zur Herstellung von Polyurethan-Polymeren. In einer Ausführungsform dieser Verwendung sind die Polyurethan-Polymere Polyurethan-Weichschaumstoffe oder Polyurethan-Hartschaumstoffe. In einer weiteren Ausführungsform dieser Verwendung sind die Polyurethan-Polymere thermoplastische Polyurethan-Polymere.

Selbstverständlich betrifft die vorliegende Erfindung auch durch ein erfindungsgemäßes Vefahren erhältliche Polyethercarbonat-Polyoxymethylen-Block-Copolymere.

Erfindungsgemäß eingeschlossen ist auch die Verwendung von funktionalisierten Polyoxymethylen-Block-Copolymeren gemäß der vorliegenden Erfindung zur Herstellung von Polyamiden, Polyurethanen, Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen.

## Beispiele

Die Erfindung wird anhand der nachfolgenden Figuren und Beispiele näher erläutert, ohne jedoch darauf beschränkt zu sein. Es zeigen:

FIG. 1 eine Reaktoranordnung zur Durchführung des erfindungsgemäßen Verfahrens

Eingesetzte Polyethercarbonate:

PEC-1: difunktionelles Poly(oxypropylen)carbonatpolyol (Desmophen 95LC01 der Firma Bayer) mit einem nominalen Molekulargewicht von 2000 g/mol, einem $CO_2$-Gehalt von 13,8 Gew.-% und einer nominalen OH-Zahl von 56,3 $mg_{KOH}/g$. Gemessen wurde eine OH-Zahl von 60,3 $mg_{KOH}/g$, woraus sich ein mittleres Molekulargewicht M.W. = 1857 g/mol ergibt. Per Gel-Permeations-Chromatographie (GPC) gegen Polystyrol-Standards wurde ein zahlenmittleres Molekulargewicht $M_n$ = 3057 g/mol und ein Polydispersitätsindex PDI = 1,12 ermittelt. Die Abweichung des per GPC ermittelten zahlenmittleren Molekulargewichts vom über die OH-Zahl ermittelten mittleren Molekulargewicht ist auf Wechselwirkungen mit dem Säulenmaterial sowie die Verwendung von Kalibrierstandards mit von PEC-1 verschiedener Struktur (Polystyrol) zurückzuführen.

Eingesetzte Starter für die Synthese der Polyethercarbonate:

PET-1: difunktionelles Poly(oxypropylen)polyol mit einer OH-Zahl von 109,6 $mg_{KOH}/g$, woraus sich das mittleres Molekulargewicht M.W. = 1022 g/mol und die durchschnittliche Summenformel $HO(CH(CH_3)CH_2)_{17,02}H$ ergibt. Per GPC gegen Polystyrol-Standards wurde ein zahlenmittleres Molekulargewicht $M_n$ = 1564 g/mol und ein Polydispersitätsindex PDI = 1,09 gemessen. Die Abweichung des per GPC ermittelten zahlenmittleren Molekulargewichts vom über die OH-Zahl ermittelten mittleren Molekulargewicht ist auf die Verwendung von Kalibrierstandards mit von PET-1 verschiedener Struktur (Polystyrol) zurückzuführen.

Der DMC-Katalysator wurde hergestellt nach Beispiel 6 von WO-A 01/80994.

Eingesetzte Isocyanate:

Isocyanat 1 mit einer durchschnittlichen Funktionalität von 2,6 und einem NCO Wert von 31,1-31,1 % enthaltend 42,4% 4,4'-MDI, 12,6% 2,4'-MDI, 2,2% 2,2'-MDI (Desmodur VP PU 0325 der Firma Bayer).

Als Formaldehyd-Quelle wurde Paraformaldehyd (CAS [30525-89-4]) der Firma Aldrich (Katalognummer 16005, Lot# SZBB0250V) eingesetzt.

Beschreibung der Methoden:

Gel-Permeations-Chromatographie (GPC): Die Messungen erfolgten auf einem Agilent 1200 Series (G1310A Iso Pump, G1329A ALS, G1316A TCC, G1362ARID, G1365D MWD) der Firma Agilent, Detektion über RID; Elutionsmittel: Chloroform (GPC grade), Flussrate 1.0 ml/min; Säulenkombination: PSS SDV Vorsäule 8×50 mm (5 μm), 2× PSS SDV linear S 8×300 ml (5 μm). Polystyrolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte in Anlehnung an DIN 55672-1.

$^1$H-NMR-Spektroskopie: Die Messungen erfolgten auf einem Bruker AV400 (400 MHz) der Firma Bruker; die Kalibrierung der chemischen Verschiebungen erfolgte relativ zu Trimethylsilan als internem Standard (δ = 0.00 ppm) oder zum Lösungsmittelsignal ($CDCl_3$, δ = 7.26 ppm); s = Singulett, m = Multiplett, bs = verbreitertes Singulett, kb = komplexer Bereich. Die Angabe der Größe der Flächenintegrale der Signale erfolgt relativ zueinander.

Der relative Anteil $n_i$ der einzelnen Struktureinheiten i errechnet sich mit den Integralen $I_i$ nach:

$$n_{PEC} = I_{PEC\text{-}CH3} / 3$$

$$n_{PE} = \sum I_{PE\text{-}CH3} / 3$$

$$n_{cPC} = I_{cPC\text{-}CH3} / 3$$

$$n_{CH2O} = \sum I_{CH2O} / 2 = [\sum I_{CH2O/PEC\text{-}CH/cPC\text{-}CH} - (I_{PEC\text{-}CH3} / 3) - (I_{cPC} /3)] / 2$$

(Die Signale für CH2O, PEC-CH und cPC-CH überlappen teilweise. Deshalb werden alle Flächenintegrale dieser Signale aufsummiert und um den PEC-CH und/oder den cPC-CH-Anteil korrigiert.)

$$n_{Gt} = I_{Gt\text{-}C(O)CH2} / 4$$

$$n_{TC} = I_{TC\text{-}CH3} / 3,$$

wobei PEC für eine Polyethercarbonat-Einheit $-(CH_2CH(CH_3)OCOO)-$, PEC-$CH_3$ für die darin enthaltene $CH_3$-Gruppe und PEC-CH für die darin enthaltene CH-Gruppe steht, PE für eine Polyether-Einheit $-(CHzCH(CH_3)O)-$ steht, welche nicht mit einer Carbonat-Einheit verbunden ist, und PE-CH3 für die darin enthaltene $CH_3$-Gruppe, cPC für zyklisches Propylencarbonat und cPC-CH3 für die darin enthaltene $CH_3$-Gruppe, CH2O für eine Oxymethylen-Einheit steht, Gt für eine Glutarat-Einheit $-OC(O)CH_2CH_2CH_2C(O)OH$ steht und Gt-$C(O)CH_2$ für die Methylengruppen, welche darin direkt an eine Carboxygruppe gebunden sind und TC für eine 4-Toluylcarbamat-Einheit $-CONH(C_6H_4)CH_3$ und TC-CH3 für die darin enthaltene $CH_3$-Gruppe steht.

Nach Normalisierung auf 2 Endgruppen EG (EG = Gt oder TC) pro Molekül beträgt die durchschnittliche Summenformel

$$EG - O - PE_{2 \cdot n_{PE}/n_{EG}} - PEC_{2 \cdot n_{PEC}/n_{EG}} - CH_2O_{2 \cdot n_{CH2O}/n_{EG}} - EG,$$

wobei EG für eine Endgruppe, also Gt oder TC, steht.

Bei Abwesenheit von Gt oder TC als Endgruppe (z.B. Beispiel 6 und 7) kann für bihydroxyfunktionelle Polyethercarbonat-Polyoxymethylen-Block-Copolymere die durchschnittliche Summenformel mit Hilfe des per OH-Zahl ermittelten durchschnittlichen Molekulargewichtes M.W. errechnet werden nach:

$$f \cdot (n_{PE} \cdot 58{,}08\,\text{g/mol} + n_{PEC} \cdot 102{,}08\,\text{g/mol} + n_{CH2O} \cdot 30{,}03\,\text{g/mol}) + 18{,}02\,\text{g/mol} = \text{M.W.}$$

$$f = \frac{\text{M.W.} - 18{,}02\,\text{g/mol}}{n_{PE} \cdot 58{,}08\,\text{g/mol} + n_{PEC} \cdot 102{,}08\,\text{g/mol} + n_{CH2O} \cdot 30{,}03\,\text{g/mol}}$$

Multiplikation des erhaltenen Faktors f mit den relativen Anteilen $n_i$ (i = PE, PEC, $CH_2O$) ergibt die durchschnittliche Anzahl $x_i$ der Einheiten i in der durchschnittlichen Summenformel

$$HO - PE_{x_{PE}} - PEC_{x_{PEC}} - CH_2O_{x_{CH2O}} - H$$

$^{13}$C-NMR-Spektroskopie: Die Messungen erfolgten auf dem Gerät AV400 (100 MHz) der Firma Bruker; die Kalibrierung der chemischen Verschiebungen erfolgte relativ zu Trimethylsilan als internem Standard ($\delta$ = 0.00 ppm) oder zum Lösungsmittelsignal ($CDCl_3$, $\delta$ = 77.16 ppm); APT (attached proton test): $CH_2$, $C_{quart}$: positives Signal (+); CH, $CH_3$: negatives Signal (-); HMBC: Hetero multiple bond correlation; HSQC: Heteronuclear single-quantum correlation.

Infrarot (IR)-Spektroskopie: Die Messungen erfolgten auf dem Gerät Alpha-P FT-IR-Spektrometer der Firma Bruker; die Messungen erfolgten in Reinsubstanz; Signalintensitäten: vs = very strong, s = strong, m = medium, w = weak, vw = very weak; b = verbreiterte Bande.

Electrospray-Massenspektrometrie (ESI-MS): Die Messungen erfolgten auf dem Gerät LTQ Orbitrap XL der Firma Thermo Fisher Scientific; Proben wurden mit MeOH verdünnt.

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "$mg_{KOH}$/g" bezieht sich auf mg[KOH]/g[Polyol]. Das durchschnittliche Molekulargewicht M.W. errechnet sich aus der OH-Zahl nach M.W. = (56 g/mol / OH-Zahl) * 1000 mg/g * F, wobei F für die durchschnittliche OH-Funktionalität steht, welche durch die OH-Funktionalität des Startermoleküls vorgegeben ist.

Die Säurezahl wurde in Anlehnung an (DIN EN ISO 2114) bestimmt, wobei jedoch mit einer 0.5 molaren methanolische Kaliumhydroxid-Lösung anstelle einer ethanolischen Kaliumhydroxid-Lösung titriert wurde. Die Endpunktserkennung erfolgte mittels Potentiometrie. Die Angabe der Einheit in "$mg_{KOH}$/g" bezieht sich auf mg[KOH]/g[Polysäure]. Das durchschnittliche Molekulargewicht M.W. errechnet sich aus der Säurezahl-Zahl nach M.W. = (56 g/mol / SäureZahl) * 1000 mg/g * F, wobei F für die durchschnittliche Säure-Funktionalität steht, welche durch die OH-Funktionalität des Startermoleküls vorgegeben ist.

Die Bestimmung der Viskosität erfolgte auf dem Gerät Physica MCR 501 Rheometer der Firma Anton Paar. Es wurde eine Kegel-Platte-Konfiguration mit einem Abstand von 50 $\mu$m gewählt (Messsystem DCP25). 0,1 g der Substanz wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

TGA (Thermogravimetrische Analysen) wurden mit dem Gerät TGA/DSC 1 der Firma Mettler Toledo durchgeführt. Es wurden zwischen 6 und 20 mg der zu vermessenden Probe mit einer Heizrate von 10 K/min von 25 °C auf 600 °C erhitzt und der relative Gewichtsverlust in Abhängigkeit von der Temperatur ermittelt. Als Auswertesoftware wurde STAR$^e$ SW 11.00 verwendet. Zur Ermittlung der verschiedenen Zersetzungsstufen wurde, sofern nicht anders erwähnt, ein tangentielles Auswerteverfahren angewendet. Als Zersetzungstemperatur wird der "Midpoint" angegeben.

Für die Reaktionen wurde eine Versuchsapparatur verwendet, die aus einem 970 ml Edelstahlautoklaven ("Depolymerisationsreaktor" R1) und einem 1700 ml Edelstahlautoklaven ("Polymerisationsreaktor" R2) bestand, welche über eine beheizbare und mit einem Ventil absperrbare Brücke zum Transfer des in R1 generierten Formaldehyd-Gases miteinander verbunden waren. Die Brücke bestand aus zwei beheizbaren 1/4-Zoll-Kapillaren, die über einen beheizbaren 200 ml Edelstahlbehälter verbunden waren, welcher mit 100 g wasserfreiem Molsieb A3 als Wasser-Absorber befüllt war. Beide Reaktoren waren mit Hohlwellenrührer und Manometer ausgestattet und unabhängig voneinander beheizbar. Die Gaszufuhr zu R1 erfolgte über ein Tauchrohr. Die Dosiergeschwindigkeit $\dot{m}_{in,R1}$ wurde mit einem Massenflußregler (MFC 1, Kapazität: 6 1/min, für Argon bzw. Stickstoff als Trägergas) oder einem Coriolis-Flussregler (CFC1, Kapazität: 700 g/h, für $CO_2$ als Trägergas) geregelt. Der mit Formaldehyd angereicherte Gasstrom wurde durch die Brücke von R1 in R2 geleitet. R2 verfügte über eine zusätzliche Gaszufuhr für $CO_2$, deren Dosiergeschwindigkeit $\dot{m}_{CFC2}$ über einen

separaten Coriolis-Flußregler (CFC2, Kapazität: 700 g/min) reguliert wurde. Zusätzlich verfügte R2 über eine Flüssigzuleitung, über die Epoxid zudosiert wurde. Die Zudosierung des Epoxides erfolgte durch Beaufschlagung des Epoxid-Vorratsgefäßes mit Stickstoffgas unter einem Druck, der mindestens 10 bar über dem Reaktionsdruck p lag, wobei der Massenstrom $\dot{m}_{CFC3}$ durch einen Coriolis-Flussregler (CFC3, Kapazität: 200 g/min) geregelt wurde. Eine dritte Zuleitung erlaubte die Zudosierung weiterer Flüssigreagenzien über eine HPLC-Pumpe. An R2 befand sich eine beheizbare 1/4-Zoll-Kapillare als Gasauslass, die mit einem beheizbaren Hinterdruckregler (back pressure regulator, BPR) versehen war, welcher einen konstanten Druck p im Reaktorsystem gewährleistete.

Die in den Beispielen eingesetzten Druckreaktoren hatte eine Höhe (innen) von 21 cm (R1) bzw. 15 cm (R2) und einen Innendurchmesser von 10 cm (R1 und R2). Die Reaktoren waren ausgestattet mit einem elektrischen Heizmantel (150 Watt maximale Heizleistung). Weiterhin waren die Reaktoren mit einem Einleitrohr sowie je einem Thermofühler mit 6 mm Durchmesser ausgestattet, der bis 60 mm über den Boden in den Reaktor ragte.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 50 mm und eine Höhe von 19 mm. An jedem Ende des Arms war ein Gasauslass angebracht, der einen Durchmesser von 3 mm aufwies. Durch die Drehung des Rührers entstand ein Unterdruck derart, dass das über der Reaktionsmischung befindliche Gas ($CO_2$ und/oder Argon oder Stickstoff und ggf. Formaldehyd) abgesaugt wurde und über die Hohlwelle des Rührers in die Reaktionsmischung eingeleitet wurde.

Beispiel 1: Herstellung eines Poly(oxypropylen)carbonat-Polyoxymethylen-Block-Copolymers und Umsetzung mit 4-Toluylisocyanat

In R1 wurden 60,61 g (2,02 mol) Paraformaldehyd, 1,60 g (4,9 mmol) 4-Dodecylbenzolsulfonsäure, 1,34g (4,7 mmol) Phosphorpentoxid und 60 ml Undecan vorgelegt. Das Gemisch wurde bei 50 U/min gerührt. In R2 wurden 50,90 g PEC-1 (25,5 mmol) und 0,41g (0,65 mmol) Dibutylzinndilaurat (DBTL) vorgelegt und das Gemisch bei 400 U/min gerührt. Der Nenndruck des BPR wurde auf p = 20 bar eingestellt und das Gesamtsystem bei geöffneter Brücke über CFC1 mit $CO_2$ bis zum Nenndruck beaufschlagt. Nach Erreichen des Nenndrucks wurde $\dot{m}_{in,R1}$ auf 300 g/h eingestellt und Systemdruck und $\dot{m}_{in,R1}$ über die Reaktionszeit konstant gehalten. Die Brücke wurde vor dem Absorber auf 140 °C, Absorber und Überleitung zu R2 auf 120 °C geheizt. Der Innenraum von R2 und die Gasauslass-Kapillare wurden auf 60 °C, der BPR auf 140 °C geheizt. Nach Erreichen der Solltemperaturen für Brücke, R2, Gasauslass und BPR wurde der Innenraum von R1 auf 125 °C geheizt und über 7 h gasförmiges Formaldehyd in R2 eingeleitet. Im Anschluss wurde $\dot{m}_{in,R1}$ auf 0 g/h gesetzt, die Brücke abgesperrt und R1 und R2 auf 25 °C abgekühlt. Anschließend wurde unter Rühren eine Lösung von 8,6 g (0,064 mol) 4-Toluylisocyanat in 25 ml Dichlormethan mit einer Flußrate von 5 ml/min über die HPLC-Pumpe in R2 eingeleitet. Im Anschluss wurde das Reaktionsgemisch in R2 bei 25 °C mit 400 U/min 18 h nachgerührt. Anschließend wurde der Überdruck über den BPR abgelassen und die Reaktionsgefäße geöffnet. In R2 wurde ein farbloses viskoses Öl mit farblosen festen Partikeln vorgefunden. Die Gewichtszunahme in R2 während der Reaktion betrug 52,11 g. Abzüglich der zudosierten Masse an 4-Toluylisocyanat und Dichlormethan entspricht dies einen Übertrag von 10,26 g (0,342 mol) Formaldehyd. Das Produkt wurde mit 100 ml Chloroform verdünnt und über einen Papierfilter filtriert. Nach Entfernen der flüchtigen Komponenten des Filtrates unter vermindertem Druck wurden 44,04 g eines klaren, farblosen Öls erhalten.

Viskosität: 2.24 Pa·s

Per thermogravimetrischer Analyse (TGA) wurden zwei Zersetzungstufen ermittelt:

Stufe 1: Zersetzungstemperatur 144,83 °C, relativer Gewichtsverlust 11,06%.
Stufe 2 : Zersetzungstemperatur 341,54 °C, relativer Gewichtsverlust 79,64%.

Per Gel-Permeations-Chromatographie (GPC) gegen Polystyrol-Standards wurde ein zahlenmittleres Molekulargewicht $M_n$ = 2956 g/mol und ein Polydispersitätsindex PDI = 1,12 ermittelt.

Die scheinbare Abnahme des zahlenmittleren Molekulargewichts gegenüber PEC-1 ist auf die veränderte Wechselwirkung des Produktes mit dem Säulenmaterial zurückzuführen und entspricht keiner tatsächlichen Abnahme des mittleren Molekulargewichts, wie per $^1$H-NMR-Spektroskopie gezeigt wurde.

$^1$H-NMR-Spektroskopie (400 MHz, $CDCl_3$): $\delta$ = 0,82-0.92 (m, 7,14 H), 1,04-1,20 (m, 97,36 H, PE-$CH_3$), 1,21-1,35 (m, 25.96 H, PEC-$CH_3$), 2,19-2,38 (m, 6,00 H, TC-$CH_3$), 3,18-4,31 (m, 116,70 H, PE-CH/PE-$CH_2$/PEC-$CH_2$), 4,69-5,05 (m, 32,93 H, $OCH_2O$/PEC-CH), 5,11-5,48 (m, 7,81 H, $OCH_2O$), 6,87-7,26 (m, 10,05 H, TC-$CH_{ar}$) ppm.

Die durchschnittliche Summenformel beträgt laut $^1$H-NMR-Spektroskopie TC-O-$PE_{32,45}$-$PEC_{8,65}$-$(CH_2O)_{16,05}$-TC. Das Produkt enthält somit durchschnittlich 16,05 Oxymethylengruppen pro Molekül.

Das durchschnittliche Molekulargewicht beträgt laut $^1$H-NMR-Spektroskopie 3534 g/mol.
$^{13}$C-APT-NMR-Spektroskopie (100 MHz, $CDCl_3$): $\delta$ = 13,7 (-), 14,7 (-), 15,7 (-), 16,2 (-), 16,8 (-), 19,9 (-, Tol-$CH_3$), 20,3 (-, Tol-$CH_3$), 22,2 (+), 28,9 (+), 29,2 (+), 31,4 (+), 62,2 (+), 63,0 (+), 69,8 (+), 69,9 (+), 70,8 (+), 70,9 (+), 71,2 (+), 71,3 (+), 72,5 (+), 72,9 (+), 73,1 (+), 73,3 (-), 73,5 (-), 74,5 (-), 74,6 (-), 74,7 (-), 74,9 (-), 75,0 (-), 75,2 (-), 75,3 (-), 77,3 (-), 82,1 (+, O-$CH_2$-O), 85,4 (+, O-$CH_2$-O), 85,6 (+, O-$CH_2$-O), 86,0 (+, O-$CH_2$-O), 88,3 (+, O-$CH_2$-O), 86,1 (+, O-$CH_2$-O), 87,5 (+, O-$CH_2$-O), 87,6 (+, O-$CH_2$-O), 87,9 (+, O-$CH_2$-O), 88,1 (+, O-$CH_2$-O), 88,6 (+, O-$CH_2$-O), 90,1 (+, O-$CH_2$-O), 90,3 (+, O-$CH_2$-O), 91,0 (+, O-$CH_2$-O), 91,4 (+, O-$CH_2$-O), 91,5 (+, O-$CH_2$-O), 91,7 (+, O-$CH_2$-O), 93,0 (+, O-$CH_2$-O), 94,5 (+, O-$CH_2$-O), 114,2 (-, TC-$CH_{ar}$), 114,3 (-, TC-$CH_{ar}$), 118,5 (-, TC-$CH_{ar}$), 120,5 (-, TC-$CH_{ar}$), 128,9 (-, TC-$CH_{ar}$), 129,2 (-, TC-$CH_{ar}$), 131,7 (+), 130,7 (+), 132,2 (+), 135,1 (+, TC-C-NH-), 145,8 (+,TC-NH-C(O)-O), 152,2 (+,TC-NH-C(O)-O), 153,8 - 154,3 (+, TC-NH-C(O)-O) ppm.

Das Auftreten einer Vielzahl an Signalen im $^1$H-NMR-Spektrum im Bereich 4,7 bis 5,5 ppm, sowie einer Vielzahl an Signalen mit positiver Polarität im $^{13}$C-APT-NMR-Spektrum im Bereich 82,1 bis 94,5 ppm zeigt das Vorliegen chemisch nicht-äquivalenter Oxymethylen-Gruppen in Blöcken $(CH_2O)_n$ mit unterschiedlicher Kettenlängen.
IR-Spektroskopie: ν = 3349 (b, vw, ν[NH]), 2971 (w), 2925 (w), 2870 (w), 1742 (m, ν[C=O]), 1617 (vw), 1600 (vw), 1522 (w), 1452 (w), 1374 (w), 1347 (vw), 1315 (vw), 1255 (s), 1160 (w), 1096 (s), 1014 (w), 968 (w), 928 (w), 854 (vw), 817 (w), 790 (w), 754 (w), 665 (vw), 511 (vw) $cm^{-1}$.

Das IR-Spektrum ist weder identisch mit dem IR-Spektrum von Paraformaldehyd, noch mit dem IR-Spektrum von PEC-1. Die NH- und C=O-Streckschwingungen können Carbamat-Einheiten zugeordnet werden. Das Auftreten dieser Banden beweist, dass die Umsetzung der terminalen OH-Gruppen mit Tolylisocyanat erfolgreich war. Das Fehlen einer NCO-Bande bei 2261 $cm^{-1}$ zeigt, dass kein freies 4-Tolylisocyanat im Produkt enthalten ist. Das Auftreten einer neuen Bande bei 968 $cm^{-1}$ weist auf das Vorliegen von Oxymethylen-Gruppen hin. Das erfindungsgemäße Beispiel 1 belegt die Herstellung eines Poly(oxypropylen)carbonat-Polyoxymethylen-Block-Copolymers und anschließende Umsetzung der funktionellen Hydroxygruppen mit einem Isocyanat.

Beispiel 2: Herstellung eines Poly(oxypropylen)carbonat-Diols und Umsetzung zu einem bicarboxyfunktionellen Poly(oxypropylen)carbonat-Polyoxymethylen-Block-Copolymer

In R1 wurden 180,33 g (6,011 mol) Paraformaldehyd, 4,18 g (0,013 mol) 4-Dodecylbenzolsulfonsäure, 3,2 g (0,011 mol) Phosphorpentoxid und 100,05 g Paraffin vorgelegt. In R2 wurden 248,5g PET-1 und 0,105g DMC-Katalysator (8322 PCA) vorgelegt. Der BPR wurde auf 1 bar Solldruck eingestellt und der Reaktor bei geöffnetem Gasauslass 10 min mit Argon gespült. Anschließend wurde R2 mit einer Membranpumpe bei 50 mbar Pumpenvakuum evakuiert und der Reaktor auf 130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}_{CFC2}$ = 500 g/h $CO_2$ beschickt. Anschließend wurden unter Rühren bei 700 U/min mit $\dot{m}_{CFC3}$ = 60 g/h 3 Pulse à 25 g (0,43 mol)Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und kontinuierlich unter Rühren bei 700 U/min mit $\dot{m}_{CFC3}$ = 60 g/h insgesamt 100 g (1,72 mol) Propylenoxid zudosiert. Nach Beendigung der Zugabe wurde R1 mit 20,5 bar $CO_2$ beaufschlagt und die Brücke zwischen R1 und R2 geöffnet. Der Massenstrom $\dot{m}_{in,R1}$ ($CO_2$) wurde auf 300 g/h eingestellt. Die Brücke wurde vor dem Absorber auf 140 °C, Absorber und Überleitung zu R2 auf 120 °C, Gasauslass-Kapillare auf 60 °C und BPR auf 140 °C geheizt. R2 wurde auf 60 °C Innentemperatur abgekühlt. Nach Erreichen der Temperatur wurde über die HPLC-Pumpe mit einer Flußrate von 5 ml/min eine Lösung von 7,22 g (0,011 mol) Dibutylzinndilaurat (DBTL) in 25 ml Dichlormethan in R2 eingeleitet. Dann wurde R1 unter Rühren bei 50 U/min auf 125 °C Innentemperatur geheizt und nach Erreichen der Temperatur über 5 h gasförmiges Formaldehyd in R2 eingeleitet. Anschließend wurde die $CO_2$-Zufuhr unterbrochen, die Brücke abgesperrt und R1 auf 25 °C abgekühlt. In R2 wurde unter Rühren bei 400 U/min mit der HPLC-Pumpe bei einer Flussrate von 10 ml/min eine Lösung von 57,05 g (0,50 mol) Glutarsäureanhydrid in 100 ml Dichlormethan eingeleitet. Nach beendeter Zugabe wurde die Innentemperatur in R2 auf 100 °C angehoben und das Reaktionsgemisch bei dieser Temperatur 18 h bei 400 U/min gerührt. Anschließend wurde der Druck abgelassen und R1 und R2 auf 25 °C gekühlt. Der Gewichtsverlust in R1 betrug 89,16 g. In R2 wurden 655,42 g eines gelbes viskoses Öl mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 463,27 g eines klaren, gelben Öls erhalten.

Per Gel-Permeations-Chromatographie (GPC) gegen Polystyrol-Standards wurde ein zahlenmittleres Molekulargewicht $M_n$ = 2091 g/mol und ein Polydispersitätsindex PDI = 1,35 ermittelt.
Viskosität: 0,52 Pa·s.

Per thermogravimetrischer Analyse (TGA) wurden zwei Zersetzungstufen ermittelt:

Stufe 1: Zersetzungstemperatur 142,40 °C, relativer Gewichtsverlust 6,80%
Stufe 2: Zersetzungstemperatur 379,64 °C, relativer Gewichtsverlust 80,28%

Zur Ermittlung der 1. Zersetzungstufe wurde ein horizontales Auswerteverfahren angewendet. Säurezahl: 52,6 $mg_{KOH}/g$. Hieraus ergibt sich ein durchschnittliches Molekulargewicht M.W. = 2129 g/mol. $^1$H-NMR-Spektroskopie (400 MHz, $CDCl_3$): δ = 0,82-0,99 (m, 2,49 H), 0,99-1,23 (m, 86,73 H, PE-$CH_3$), 1,23-1,39 (m, 7,90 H, PEC-$CH_3$), 1,48 (d, *J*= 6,0 Hz, 2,29 H, cPC-$CH_3$), 1,87-1,99 (m, 3,91 H, Gt-$CH_2$), 2,32-2,47 (m, 8,00 H, Gt-C(O)$CH_2$), 3,17-3,79 (m, 87,29 H, PE-CH/PE-$CH_2$/PEC-$CH_2$), 3,81-3,95 (m, 1,97 H), 4,02 (dd, *J*= 8,2 Hz, 1,01 H, cPC-$CH_2$), 4,57 (dd, *J* = 7,5 Hz, 0,72 H, cPC-$CH_2$), 4,69-4,94 (m, 5,62 H, $OCH_2O$/PEC-CH/cPC-CH), 5,13 (s, 3,09 H, $OCH_2O$), 5,27 (s, 0,11 H, $OCH_2O$), 5,27-5,39 (m, 3,14 H, $OCH_2O$) ppm.

Die durchschnittliche Summenformel beträgt laut $^1$H-NMR-Spektroskopie Gt-O-$PE_{28,91}$-$PEC_{2,63}$-$(CH_2O)_{4,29}$-Gt. Das Produkt enthält somit durchschnittlich 4,29 Oxymethylengruppen pro Molekül.

Das durchschnittliche Molekulargewicht beträgt laut $^1$H-NMR-Spektroskopie 2323 g/mol. $^{13}$C-APT-NMR-Spektroskopie (100 MHz, $CDCl_3$): δ = 13,0 (-), 13,6 (-), 16,2 (-), 16,6 (-), 16,7 (-), 16,8 (-), 17,1 (-), 17,5 (-), 17,6 (-), 17,9 (-), 18,1 (-), 18,8 (-), 19,2 (+), 19,3 (+), 19,4 (+), 19,5 (+), 19,6 (+), 22,1 (+), 24,3 (+), 24,5 (+), 25,7 (+), 26,1 (+), 28,6 (+), 28,8 (+), 29,0 (+), 29,1 (+), 31,3 (+), 32,1 (+), 32,3 (+), 32,6 (+), 32,8 (+), 32,9 (+), 33,3 (+), 65,1 (-), 66,6 (-), 66,7 (-), 70,1 (+), 72,4 (+), 72,6 (+), 72,7 (+), 72,9 (-), 73,2 (-), 73,3 (-), 73,9 (-), 73,9 (-), 74,4 (-), 74,5 (-), 74,6 (-), 74,8 (-), 74,8 (-), 74,9 (-), 76,0 (-), 76,0 (-), 84,3 (+, O-$CH_2$-O), 84,9 (+, O-$CH_2$-O), 87,8 (+, O-$CH_2$-O), 88,5 (+, O-$CH_2$-O), 88,8 (+, O-$CH_2$-O), 89,3 (+, O-$CH_2$-O), 89,6 (+, O-$CH_2$-O), 90,0 (+, O-$CH_2$-O), 90,1 (+, O-$CH_2$-O), 91,7 (+, O-$CH_2$-O), 92,9 (+, O-$CH_2$-O), 153,7 (+, C=O, PEC), 153,8 (+, C=O, PEC), 154,2 (+, C=O, PEC), 154,3 (+, C=O, PEC), 171,6 (+), 171,7 (+), 171,8 (+), 175,0 (+), 175,2 (+) ppm.

Sowohl im $^1$H- als auch im $^{13}$C-NMR-Spektrum wurden Signale für Polyethercarbonat-Gruppen (PEC) und Oxymethylen-Gruppen ($OCH_2O$) beobachtet. Das Auftreten einer Vielzahl an Signalen im $^1$H-NMR-Spektrum im Bereich 4,4 bis 5,2 ppm, sowie einer Vielzahl an Signalen mit positiver Polarität im $^{13}$C-APT-NMR-Spektrum im Bereich 84,3 bis 92,9 ppm zeigt das Vorliegen chemisch nicht-äquivalenter Oxymethylen-Gruppen in Blöcken $(CH_2O)_n$ mit unterschiedlicher Kettenlängen. Das Auftreten von Carbonat-Signalen im $^{13}$C-APT-NMR-Spektrum bei 153 bis 155 ppm zeigt das Vorliegen von Polyethercarbonat-Einheiten.
IR-Spektroskopie: ν = 2971 (vw,), 2930 (w), 2896 (w), 2869 (w), 1811 (w, ν[C=O; cPC]), 1737 (m, ν[C=O]; PEC), 1617 (vw), 1453 (w), 1373 (w), 1345 (vw), 1296 (vw), 1262 (w), 1094 (s), 1012 (w), 968 (w), 928 (vw), 865 (vw), 776 (vw), 734 (vw), 524 (vw) $cm^{-1}$.

Das IR-Spektrum ist weder identisch mit dem IR-Spektrum von Paraformaldehyd, noch mit dem IR-Spektrum von PET-1. Die Bande bei 1737 $cm^{-1}$ zeigt die Anwesenheit von Polyethercarbonat-Blöcken. Das Auftreten einer Bande bei 968 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyethercarbonat- und Polyoxymethylen-Blöcken.

Das erfindungsgemäße Beispiel 2 belegt die Herstellung eines carboxyfunktionellen Poly(oxypropylen)carbonat-Polyoxymethylen-Block-Copolymers, wobei die Herstellung des Polyethercarbonat-Blocks und die Herstellung des Polyoxymethylen-Blocks sukzessive im gleichen Reaktionsgefäß ohne zwischenzeitige Aufreinigung des Polyethercarbonates erfolgte.

Vergleichsbeispiel 1: Thermische Stabilität von Polyoxymethylen-Homopolymeren

Per thermogravimetrischer Analyse (TGA) wurde die thermische Stabilität von Paraformaldehyd als Vertreter für oligomere Polyoxymethylen-Homopolymere untersucht. Es wurden zwei Zersetzungsstufen ermittelt:

Stufe 1: Zersetzungstemperatur 128,87 °C, relativer Gewichtsverlust 61,83%
Stufe 2: Zersetzungstemperatur 155,38 °C, relativer Gewichtsverlust 16,38%

Der Vergleich von Beispiel 1 und 2 zu Vergleichsbeispiel 1 zeigt, dass die erfindungsgemäßen Polyethercarbonat-Polyoxymethylen-Block-Copolymere gegenüber oligomeren Polyoxymethylen-Homopolymeren eine erhöhte thermische Stabilität aufweisen. So weisen die in Beispiel 1 und 2 erhaltenen erfindungsgemäßen Polyethercarbonat-Block-Copolymeren sowohl in der ersten als auch in der zweiten Zersetzungsstufe höhere Zersetzungstemperaturen auf als das in Vergleichsbeispiel 1 untersuchte oligomere Polyoxymethylen-Homopolymer (144,83 bzw. 142,40 °C gegenüber 128,87 °C in der ersten Stufe, sowie 341,54 bzw. 379,64 °C gegenüber 155,38 °C in der zweiten Stufe). Weiterhin erleiden die in Beispiel 1 und 2 erhaltenen erfindungsgemäßen Polyethercarbonat-Block-Copolymere in der ersten Zersetzungsstufe einen weitaus geringeren relativen Gewichtsverlust als das in Vergleichsbeispiel 1 untersuchte Polyoxymethylen-Homopolymer (11,06 bzw. 6,8% gegenüber 61,83% Gewichtsverlust in Stufe 1).

Beispiel 3: Umsetzung des in Beispiel 2 erhaltenen bicarboxyfunktionellen Poly(oxypropylen)carbonat-Polyoxymethylen-Block-Copolymers mit Phenylglycidylether

In einen Glaskolben wurden 50 g des in Beispiel 2 erhaltenen bicarboxyfunktionellen Poly(oxypropylen)carbonat-Polyoxymethylen-Block-Copolymers mit 14,06 g (97,2 mmol) Phenylglycidylether und 0,25 g (0,94 mmol) Triphenylphophin eingewogen und unter Rückfluss und 18 h bei 80 °C gerührt, wobei sich das Gemisch von gelb zu orange verfärbte. Das Produkt wurde wie erhalten weiter eingesetzt.

OH-zahl: 38,3 $mg_{KOH}$/g. Hieraus ergibt sich ein zahlenmittleres Molekulargewicht von 2924 g/mol.

Die OH-Zahl zeigt, dass die Reaktion des Carboxy-terminierten Poly(oxypropylen)carbonat-Polyoxymethylen-Block-Copolymers mit Phenylglycidylether zu einem Hydroxy-terminierten Polyoxymethylen-Block-Copolymer erfolgreich war.

$^1$H-NMR-Spektroskopie (400 MHz, $CDCl_3$): $\delta$ = 0,79-0,98 (m, 2,59 H), 0,98-1,19 (m, 86,81 H, PE-$CH_3$), 1,92-1,30 (m, 6,60 H, PEC-$CH_3$), 1,45 (d, *J* = 6,4 Hz, 2,00 H, cPC-$CH_3$), 1,88-1,99 (m, 3,88 H, Gt-$CH_2$), 2,32-2,45 (m, 8,00 H, Gt-C(O)$CH_2$), 2,71-2,32 (m, 1,02 H), 2,87 (t, *J* = 4,4 Hz, 1,05 H), 3,23-3,75 (m, 87,93 H, PE-CH/PE-$CH_2$/PEC-$CH_2$), 3,75-3,78 (m, 2,07 H), 3,87-3,95 (kb, 4,95 H, PGE-$CH_2$/cPC-$CH_2$), 4,08-4,31 (kb, 5,39 H, PGE-CH/PGE-$CH_2$), 4,51 (dd, *J* = 8,1 Hz, 0,64 H, cPC-$CH_2$), 4,74-4,91 (m, 4,91 H, PEC-CH/cPC-CH/$OCH_2O$) 5,12 (s, 1,53 H, $OCH_2O$), 5,18-5,21 (m, 0,37 H, $OCH_2O$), 5,27 (s, 2,42 H, $OCH_2O$), 5,29-5,38 (m, 2,34 H, $OCH_2O$), 6,84-6,96 (m, 7,55 H, PGE-$CH_{ar}$), 7,21-7,28 (m, 5,49 H, PGE-$CH_{ar}$) ppm.

Das $^1$H-NMR-Spektrum zeigt neue Signale im Bereich 3,87-4,31 ppm sowie im aromatischen Bereich (6,84-7,28 ppm), die auf den Einbau von Phenylglycidolether in Form von 2-Hydroxy-3-Phenoxypropyloxy-Gruppen PhO-$CH_2$-CH(OH)-$CH_2$-O- (zugeordnet als PGE-$CH_2$ bzw. PGE-CH) hinweisen. Für den relativen Anteil an PGE-Gruppen gilt $n_{PGE} = [I_{PGE-CH} + I_{PGE-CH2} - I_{cPC-CH3} /3] /5 = 1{,}93$. Somit beträgt $n_{Gt} : n_{PGE} = 1{,}04$. Dies zeigt, dass 96% der Glutarat-Endgruppen mit Phenylglycidylether reagiert haben.

Die durchschnittliche Summenformel beträgt laut $^1$H-NMR-Spektroskopie PGE-Gt-O-$PE_{28,94}$-$PEC_{2,20}$-$(CH_2O)_{4,35}$-Gt-PGE. Gegenüber der Summenformel des Produktes aus Beispiel 2 wird somit keine wesentliche Änderung des PEC- und $CH_2O$-Anteils beobachtet.

Das durchschnittliche Molekulargewicht beträgt laut $^1$H-NMR-Spektroskopie 2583 g/mol.

$^{13}$C-APT-NMR-Spektroskopie (100 MHz, $CDCl_3$): $\delta$ = 17,2 (-), 17,4 (-), 17,5 (-), 17,7 (-), 18,1 (-), 18,3 (-), 18,5 (-), 19,5 (-), 19,8 (+), 19,9 (+), 20,1 (+), 20,1 (+), 22,7 (+), 25,0 (+), 25,1 (+), 29,4 (+), 29,6 (+), 31,9 (+), 32,8 (+), 33,0 (+), 33,1 (+), 33,3 (+), 44,7 (+), 50,2 (-), 65,5 (+), 66,2 (+), 68,4 (-), 68,6 (+), 68,7 (+), 70,6 (+), 72,9 (+), 72,9 (+), 73,0 (+), 73,4 (+), 74,5 (+), 74,9 (-), 75,0 (-), 75,1 (-), 75,4 (-), 75,4 (-), 75,8 (+), 75,9 (+), 84,5 (+, O-$CH_2$-O), 84,9 (+, O-$CH_2$-O), 85,6 (+, O-$CH_2$-O), 88,5 (+, O-$CH_2$-O), 88,7 (+, O-$CH_2$-O), 89,7 (+, O-$CH_2$-O), 90,9 (+, O-$CH_2$-O), 92,3 (+, O-$CH_2$-O), 93,0 (+, O-$CH_2$-O), 93,1 (+, O-$CH_2$-O), 93,6 (+, O-$CH_2$-O), 114,6 (-), 114,7 (-), 121,2 (-), 121,3 (-), 129,5 (-), 129,6 (-), 158,3 (+, C=O, PEC) ppm.

IR-Spektroskopie: v = 3449 (b, w v[OH]), 2970 (w,), 2931 (w), 2869 (w), 1808 (w, v[C=O; cPC]), 1737 (m, v[C=O]; PEC), 1600 (w), 1496 (vw), 1453 (w), 1373 (w), 1343 (vw), 1296 (vw), 1244 (w), 1096 (s), 1014 (w), 928 (vw), 862 (vw), 814 (vw), 755 (w), 735 (vw), 692 (vw) $cm^{-1}$.

Beispiel 4: Umsetzung des in Beispiel 2 erhaltenen bicarboxyfunktionellen Poly(oxypropylen)carbonat-Polyoxymethylen-Block-Copolymers mit Isocyanat 1

In einem Becherglas wurden 10 g des in Beispiel 2 erhaltenen bicarboxyfunktionellen Poly(oxypropylen)carbonat-Polyoxymethylen-Block-Copolymers, 0,5 ml Wasser und 20 mg (0,032 mmol) DBTL vorgelegt und das Gemisch auf 60 °C erwärmt. Anschließend wurden unter Rühren 1,21 g Isocyanat 1 zugegeben und das Gemisch 15 s intensiv gerührt, wobei das Gemisch aushärtete. Es wurde ein farbloser, intransparenter glasartiger Feststoff erhalten.

Die Beispiele 3 und 4 belegen die Umsetzung eines carboxyfunktionellen Poly(oxypropylen)carbonat-Polyoxymethylen-Block-Copolymers mit Epoxiden oder Isocyanaten.

Beispiel 5: Umsetzung des in Beispiel 3 erhaltenen bihydroxyfunktionellen Poly(oxypropylen)carbonat-Polyoxymethylen-Block-Copolymers mit Isocyanat 1

In einem Becherglas wurden 10 g des in Beispiel 2 erhaltenen bihydroxyfunktionellen Poly(oxypropylen)carbonat-Polyoxymethylen-Block-Copolymers, 0,5 ml Wasser und 20 mg (0,032 mmol) DBTL vorgelegt und das Gemisch auf 60 °C erwärmt. Anschließend wurden unter Rühren 1,21 g Isocyanat 1 zugegeben und das Gemisch 15 s intensiv gerührt, wobei das Gemisch aushärtete. Es wurde ein gelblicher, intransparenter glasartiger Feststoff erhalten.

Beispiel 5 belegt die Umsetzung eines hydroxy-funktionalisierten Poly(oxypropylen)carbonat-Polyoxymethylen-Block-Copolymers mit Isocyanaten.

Beispiel 6: Herstellung eines Poly(oxypropylen)carbonat-Diols und Umsetzung zu einem bihydroxyfunktionellen Poly(oxypropylen)carbonat-Polyoxymethylen-Block-Copolymer

In R1 wurden 179,39 g (5,98 mol) Paraformaldehyd, 3,93 g (0,012 mol) 4-Dodecylbenzolsulfonsäure, 3,32 g (0,011 mol) Phosphorpentoxid und 101,09 g Paraffin vorgelegt. In R2 wurden 252,30 g PET-1 und 0,103 g DMC-Katalysator vorgelegt. Der BPR wurde auf 1 bar Solldruck eingestellt und der Reaktor bei geöffnetem Gasauslass 10 min mit Stickstoff gespült. Anschließend wurde R2 mit einer Membranpumpe bei 50 mbar Pumpenvakuum evakuiert und der Reaktor auf 130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}C_{FC2}$ = 500 g/h $CO_2$ beschickt. Anschließend wurden unter Rühren bei 700 U/min mit $\dot{m}_{CFC3}$ = 60 g/h 3 Pulse à 25 g (0,43 mol) Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und die Innentemperatur in R2 auf 100 °C reduziert. Die Brücke wurde vor dem Absorber auf 140 °C, Absorber und Überleitung zu R2 auf 120 °C, Gasauslass-Kapillare auf 60 °C und BPR auf 140 °C geheizt. Dann wurde R1 mit $\dot{m}_{in,R1}$ = 500 g/h $CO_2$ auf einen Druck von 20,5 bar beaufschlagt. Nach Erreichen des Drucks wurde der Massenstrom $\dot{m}_{in,R1}$ auf 300 g/h reduziert, die Brücke zwischen R1 und R2 geöffnet und R1 unter Rühren bei 200 U/min auf 125 °C Innentemperatur beheizt. Unter Rühren bei 1000 U/min wurde nun über 2 Stunden gasförmiges Formaldehyd in R2 eingeleitet. Anschließend wurde die $CO_2$-Zufuhr unterbrochen, die Brücke abgesperrt und R1 auf 25 °C abgekühlt. In R2 wurden bei 100 °C mit $\dot{m}C_{FC3}$= 60 g/h insgesamt 25 g (0,43 mol) Propylenoxid eingeleitet. Nach Beendigung der Zugabe wurde das Reaktionsgemisch bei 100 °C 18 Stunden mit 400 U/min nachgerührt. Anschließend wurde der Druck in R2 abgelassen. Der Gewichtsverlust in R1 während der Reaktion betrug 42,97 g, die Gewichtszunahme in R2 insgesamt 111,16 g. Abzüglich des zudosierten Propylenoxids ergibt dies einen Formaldehyd-Eintrag von 11,16 g (0,37 mol) Formaldehyd. In R2 wurde ein schwach rosa gefärbtes Öl mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 335,75 g eines klaren, schwach rosa gefärbten Öls erhalten.

Per Gel-Permeations-Chromatographie (GPC) gegen Polystyrol-Standards wurde ein zahlenmittleres Molekulargewicht $M_n$ = 1282 g/mol und ein Polydispersitätsindex PDI=1,17 ermittelt.

OH-Zahl: 80,6 $mg_{KOH}$/g. Hieraus ergibt sich ein durchschnittliches Molekulargewicht von 1390 g/mol. $^1$H-NMR-Spektroskopie (400 MHz, $CDCl_3$): $\delta$ = 0,91-0,97 (m, 0,53 H), 0,98-1,20 (m, 97,13 H, PE-$CH_3$), 1,20-1,31 (m, 3,37 H, PEC-$CH_3$), 1,46 (d, *J*= 6,2 Hz, 4,83 H, cPC-$CH_3$), 2,27 (s, 1,00 H), 3,07-3,94 (m, 101,33 H, PE-CH/PE-$CH_2$/PEC-$CH_2$), 3,99 (t, *J* = 7,7 Hz, 1,65 H, cPC-$CH_2$), 4,52 (t, *J* = 7,7 Hz, 1,50 H, cPC-$CH_2$), 4,65-4,91 (m, 3,85 H, $OCH_2O$/PEC-CH/cPC-CH), 5,12 (s, 1,47 H, $OCH_2O$) ppm.

Laut $^1$H-NMR-Spektroskopie beträgt das Verhältnis PE : PEC : ($CH_2O$) im Produkt 28,91 : 1,00 : 1,16. Bei einem Molekulargewicht von 1390 g/mol (bestimmt über die OH-Zahl) ergibt das eine durchschnittliche Summenformel HO-$PE_{21,97}$-$PEC_{0,76}$-$(CH_2O)_{0,88}$-H.

Im Produktgemisch sind somit Polyethercarbonat-Polyoxymethylen-Block-Copolymere enthalten. $^{13}$C-APT-NMR-Spektroskopie (100 MHz, $CDCl_3$): $\delta$ = 16,4 (-), 16,5 (-),16,6 (-), 17,3 (-), 17,4 (-), 17,7 (-), 17,9 (-), 18,2 (-), 18,5 (-), 64,7 (-), 65,2 (-), 65,9 (-), 69,7 (+), 72,1 (+), 72,4 (+), 72,6 (-), 72,8 (+), 73,0 (+), 73,7 (+), 73,8 (+), 73,9 (-), 74,0 (-), 74,1 (-), 74,2 (-), 74,4 (-), 74,5 (-), 74,6 (+), 74,7 (+), 74,9 (+), 75,0 (+), 75,3 (-), 75,4 (-), 76,3 (+), 76,4 (+), 88,9 (+, O-$CH_2$-O), 89,5 (+, O-$CH_2$-O), 90,9 (+, O-$CH_2$-O), 90,9 (+, O-$CH_2$-O), 91,0 (+, O-$CH_2$-O), 92,5 (+, O-$CH_2$-O), 93,3 (+, O-$CH_2$-O), 93,5 (+, O-$CH_2$-O), 153,8 (+, C=O, PEC), 153,9 (+, C=O, PEC) ppm.

Das Auftreten einer Vielzahl an Signalen im $^1$H-NMR-Spektrum im Bereich 4,2 bis 5,7 ppm, sowie einer Vielzahl an Signalen mit positiver Polarität im $^{13}$C-APT-NMR-Spektrum im Bereich 85,3 bis 92,6 ppm zeigt das Vorliegen chemisch nicht-äquivalenter Oxymethylen-Gruppen in Blöcken $(CH_2O)_n$ mit unterschiedlicher Kettenlängen. Das Auftreten von Carbonat-Signalen im $^{13}$C-APT-NMR-Spektrum bei 153,8 bzw. 153,9 ppm zeigt das Vorliegen von Polyethercarbonat-Einheiten.

IR-Spektroskopie: ν = 3484 (b, w ν[OH]), 2970 (vw), 2930 (w), 2896 (w), 2869 (w), 1804 (m, ν[C=O; cPC]), 1743 (w, ν[C=O]; PEC), 1451 (w), 1373 (w), 1345 (m), 1297 (vw), 1262 (w), 1093 (s), 967 (vw), 926 (w), 839 (vw), 775 (vw), 712 (vw), 662 (vw), 638 (vw), 524 (vw) $cm^{-1}$.

Das IR-Spektrum ist weder identisch mit dem IR-Spektrum von Paraformaldehyd, noch mit dem IR-Spektrum von PET-1. Die Bande bei 1743 $cm^{-1}$ zeigt die Anwesenheit von Polyethercarbonat-Blöcken. Das Auftreten einer Bande bei 967 $cm^{-1}$ weist auf das Vorliegen von Oxymethylen-Einheiten hin.

Beispiel 7: Herstellung eines Poly(oxypropylen)carbonat-Diols und Umsetzung zu einem bihydroxyfunktionellen Poly(oxypropylen)carbonat-Polyoxymethylen-Block-Copolymer

In R1 wurden 169,41 g (5,65 mol) Paraformaldehyd, 4,00 g (0,012 mol) 4-Dodecylbenzolsulfonsäure, 3,31 g (0,011 mol) Phosphorpentoxid und 103,41 g Paraffin vorgelegt. In R2 wurden 251,00 g PET-1 und 0,157 g DMC-Katalysator vorgelegt. Der BPR wurde auf 1 bar Solldruck eingestellt und der Reaktor bei geöffnetem Gasauslass 10 min mit Stickstoff gespült. Anschließend wurde R2 mit einer Membranpumpe bei 50 mbar Pumpenvakuum evakuiert und der Reaktor auf 130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}_{CFC2}$ = 500 g/h $CO_2$ beschickt. Anschließend wurden unter Rühren bei 1000 U/min mit $\dot{m}_{CFC3}$ = 60 g/h 3 Pulse à 25 g (0,43 mol) Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und die Innentemperatur in R2 auf 100 °C reduziert. Die Brücke wurde vor dem Absorber auf 140 °C, Absorber und Überleitung zu R2 auf 120 °C, Gasauslass-Kapillare auf 60 °C und BPR auf 140 °C geheizt. Dann wurde R1 mit $\dot{m}_{in},_{R1}$ = 500 g/h $CO_2$ auf einen Druck von 20,5 bar beaufschlagt. Nach Erreichen des Drucks wurde Massenstrom $\dot{m}_{in,R1}$ auf 300 g/h reduziert, die Brücke zwischen R1 und R2 geöffnet und R1 unter Rühren bei 200 U/min auf 125 °C Innentemperatur beheizt. Unter Rühren bei 1000 U/min wurde nun über 2 Stunden gasförmiges Formaldehyd in R2 eingeleitet. Anschließend wurde die $CO_2$-Zufuhr unterbrochen, die Brücke abgesperrt und R1 auf 25 °C abgekühlt. In R2 wurden bei 100 °C mit $\dot{m}_{CFC3}$ = 60 g/h insgesamt 25 g (0,43 mol) Propylenoxid eingeleitet. Nach Beendigung der Zugabe wurde das Reaktionsgemisch bei 100 °C 18 Stunden nachgerührt. Anschließend wurde der Druck in R2 abgelassen. Der Gewichtsverlust in R1 während der Reaktion betrug 43,51 g, die Gewichtszunahme in R2 insgesamt 113,18 g. Abzüglich des zudosierten Propylenoxids ergibt dies einen Formaldehyd-Eintrag von 13,8 g (0,46 mol) Formaldehyd. In R2 wurde ein schwach rosa gefärbtes Öl mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 345,63 g eines klaren, schwach rosa gefärbten Öls erhalten.

Per Gel-Permeations-Chromatographie (GPC) gegen Polystyrol-Standards wurde ein zahlenmittleres Molekulargewicht $M_n$ = 1453 g/mol und ein Polydispersitätsindex PDI = 1,12 ermittelt.

OH-Zahl: 80,2 $mg_{KOH}$/g. Hieraus ergibt sich ein zahlenmittleres Molekulargewicht von 1397 g/mol.

$^1$H-NMR-Spektroskopie (400 MHz, $CDCl_3$): δ = 0,90-0,99 (m, 0,43 H), 0,99-1,22 (m, 57,66 H, PE-$CH_3$), 0,1,22-1,39 (m, 3,95 H, PEC-$CH_3$), 1,46 (d, *J*= 6,3 Hz, 1,11 H, cPC-$CH_3$), 2,34-2,40 (m, 0,39 H), 2,65-2,72 (m, 0,40 H), 2,88-2,99 (m, 0,52 H), 3,07-3,96 (m, 61,50 H, PE-CH/PE-$CH_2$/PEC-$CH_2$), 4,01 (t, *J* = 7,5 Hz, 0,44 H, cPC-$CH_2$), 4,57 (t, *J* = 8,1 Hz, 0,26 H, cPC-$CH_2$), 4,66-4,78 (m, 0,51 H, $OCH_2O$), 4,78-4,94 (m, 1,52 H, $OCH_2O$/PEC-CH/cPC-CH), 5,01-5,08 (m, 0,15 H, $OCH_2O$), 5,11 (s, 1,00 H, $OCH_2O$) ppm.

Laut $^1$H-NMR-Spektroskopie beträgt das Verhältnis PE : PEC : ($CH_2O$) im Produkt 25,63 : 1,76 : 1,00. Bei einem Molekulargewicht von 1397 g/mol (bestimmt über die OH-Zahl) ergibt das eine durchschnittliche Summenformel HO-$PE_{22,55}$-$PEC_{1,55}$-$(CH_2O)_{0,88}$-H.

Im Produktgemisch sind somit Polyethercarbonat-Polyoxymethylen-Block-Copolymere enthalten.

$^{13}$C-APT-NMR-Spektroskopie (100 MHz, $CDCl_3$): δ = 16,3 (-), 16,4 (-),16,6 (-), 16,7 (-), 17,3 (-), 17,5 (-), 17,8 (-), 17,9 (-), 18,2 (-), 18,6 (-), 46,8 (+), 47,0 (-), 64,7 (-), 64,8 (-), 66,0 (-), 66,0 (-), 69,7 (+), 72,2 (+), 72,5 (+), 72,8 (-), 73,1 (+), 73,9 (+), 73,9 (+), 74,2 (-), 74,3 (-), 74,4 (-), 74,6 (-), 74,7 (+), 74,9 (+), 75,0 (+), 75,1 (+), 75,4 (-), 75,5 (-), 76,3 (+), 76,5 (+), 85,3 (+, O-$CH_2$-O), 86,1 (+, O-$CH_2$-O), 86,7 (+, O-$CH_2$-O), 86,8 (+, O-$CH_2$-O), 88,3 (+, O-$CH_2$-O), 88,8 (+, O-$CH_2$-O), 89,2 (+, O-$CH_2$-O), 89,8 (+, O-$CH_2$-O), 90,5 (+, O-$CH_2$-O), 92,6 (+, O-$CH_2$-O), 153,8 (+, C=O, PEC), 153,9 (+, C=O, PEC) ppm.

Das Auftreten einer Vielzahl an Signalen im $^1$H-NMR-Spektrum im Bereich 4,2 bis 5,7 ppm, sowie einer Vielzahl an Signalen mit positiver Polarität im $^{13}$C-APT-NMR-Spektrum im Bereich 85,3 bis 92,6 ppm zeigt das Vorliegen chemisch nicht-äquivalenter Oxymethylen-Gruppen in Blöcken $(CH_2O)_n$ mit unterschiedlicher Kettenlängen. Das Auftreten von Carbonat-Signalen im $^{13}$C-APT-NMR-Spektrum bei 153,8 bzw. 153,9 ppm zeigt das Vorliegen von Polyethercarbonat-Einheiten.

IR-Spektroskopie: ν = 3466 (b, w ν[OH]), 2969 (vw), 2930 (w), 2869 (w), 1813 (m, ν[C=O; cPC]), 1743 (w, ν[C=O]; PEC), 1451 (w), 1372 (w), 1343 (m), 1296 (vw), 1262 (w), 1094 (s), 1014 (w), 968 (vw), 925 (w), 863 (w), 825 (vw) $cm^{-1}$.

Das IR-Spektrum ist weder identisch mit dem IR-Spektrum von Paraformaldehyd, noch mit dem IR-Spektrum von PET-1. Die Bande bei 1743 $cm^{-1}$ zeigt die Anwesenheit von Polyethercarbonat-Blöcken. Das Auftreten einer Bande bei 968 $cm^{-1}$ weist auf das Vorliegen von Oxymethylen-Einheiten hin.

Die erfindungsgemäßen Beispiele 6 und 7 belegen die Herstellung von Produktgemischen enthaltend Poly(oxypropylen)carbonat-Polyoxymethylen-Block-Copolymere, wobei die Herstellung des Polyethercarbonat-Blocks und die Herstellung des Polyoxymethylen-Blocks sukzessive im gleichen Reaktionsgefäß ohne zwischenzeitige Aufreinigung

des Polyethercarbonates erfolgte und der Katalysator zur Herstellung des Polyethercarbonat-Blocks mit dem Katalysator zur Herstellung des Polyoxymethylen-Blocks identisch ist.

## Patentansprüche

1. Verfahren zur Herstellung von Polyethercarbonat-Polyoxymethylen-Block-Copolymeren, umfassend den Schritt der Polymerisation von Formaldehyd, **dadurch gekennzeichnet, dass** die Polymerisation von Formaldehyd in Gegenwart eines Polyethercarbonats mit mindestens einem Zerewitinoff-aktiven H-Atom erfolgt.

2. Verfahren gemäß Anspruch 1, wobei die Polymerisation von Formaldehyd weiterhin in Gegenwart eines Katalysators erfolgt.

3. Verfahren gemäß Anspruch 1 oder 2, wobei die Polymerisation weiterhin in Gegenwart eines Co-Monomers erfolgt.

4. Verfahren gemäß einem oder mehreren der Ansprüche 1 bis 3, wobei das Formaldehyd als gasförmiges Formaldehyd in das Reaktionsgefäß eingetragen wird.

5. Verfahren gemäß einem oder mehreren der Ansprüche 1 bis 4, wobei das zur Herstellung der Polyethercarbonat-Polyoxymethylen-Block-Copolymere verwendete Polyethercarbonat vor der Polymerisation des Formaldehyds im gleichen Reaktionsgefäß hergestellt und ohne Aufreinigungsschritte umgesetzt wird.

6. Verfahren gemäß einem oder mehreren der Ansprüche 1 bis 5, wobei das zur Herstellung der Polyethercarbonat-Polyoxymethylen-Block-Copolymere verwendete Polyethercarbonat aus den Ausgangsstoffen Starterverbindung, Epoxid und Kohlenstoffdioxid hergestellt wird.

7. Verfahren gemäß einem oder mehreren der Ansprüche 1 bis 6, wobei das bei der Herstellung der Polyethercarbonat-Polyoxymethylen-Block-Copolymere aus der Polymerisation von Formaldehyd in Gegenwart eines Polyethercarbonats mit mindestens einem Zerewitinoff-aktiven H-Atom erhaltene Produktgemisch mit zyklischen Carbon- oder Kohlensäureestern umgesetzt wird.

8. Verfahren gemäß einem oder mehreren der Ansprüche 1 bis 7, wobei das bei der Herstellung der Polyethercarbonat-Polyoxymethylen-Block-Copolymere aus der Polymerisation von Formaldehyd in Gegenwart eines Polyethercarbonats mit mindestens einem Zerewitinoff-aktiven H-Atom erhaltene Produktgemisch oder das durch anschließende Umsetzung mit zyklischen Carbon- oder Kohlensäureestern gemäß Anspruch 7 erhaltene Produktgemisch durch Reaktion mit zyklischen Anhydriden zu Carbonsäure-funktionalisierten Polyethercarbonat-Polyoxymethylen-Block-Copolymeren umgesetzt wird.

9. Verfahren gemäß einem oder mehreren der Ansprüche 1 bis 8, wobei das bei der Herstellung der Polyethercarbonat-Polyoxymethylen-Block-Copolymere aus der Polymerisation von Formaldehyd in Gegenwart eines Polyethercarbonats mit mindestens einem Zerewitinoff-aktiven H-Atom erhaltene Produktgemisch oder das durch anschließende Reaktion mit zyklischen Carbon- oder Kohlensäureestern gemäß Anspruch 7 und/oder durch anschließende Reaktion mit zyklischen Anhydriden gemäß Anspruch 8 erhaltene Produktgemisch durch Reaktion mit Epoxiden zu Hydroxy-funktionalisierten Polyethercarbonat-Polyoxymethylen-Block-Copolymeren umgesetzt wird.

10. Verfahren gemäß einem oder mehreren der Ansprüche 1 bis 9, weiterhin umfassend den Schritt der Reaktion des bei der Herstellung der Polyethercarbonat-Polyoxymethylen-Block-Copolymere aus der Polymerisation von Formaldehyd in Gegenwart eines Polyethercarbonats mit mindestens einem Zerewitinoff-aktiven H-Atom erhaltenen Produktgemisches oder des durch anschließende Reaktion mit zyklischen Carbon- oder Kohlensäureestern gemäß Anspruch 7 und/oder durch Reaktion mit zyklischen Anhydriden gemäß Anspruch 8 und/oder durch Reaktion mit Epoxiden gemäß Anspruch 9 erhaltenen Produktgemisches mit Isocyanaten.

11. Verfahren gemäß Anspruch 10, wobei das Isocyanat ein aliphatisches oder aromatisches Di- oder Polyisocyanat ist und wobei aus der Reaktion ein Polyurethan oder ein Polyamid als Produkt erhalten wird.

12. Verwendung von Polyethercarbonat-Polyoxymethylen-Block-Copolymeren gemäß einem oder mehreren der Ansprüche 1 bis 11 zur Herstellung von Polyurethan-Polymeren.

13. Verwendung gemäß Anspruch 12, wobei die Polyurethan-Polymere Polyurethan-Weichschaumstoffe oder Polyurethan-Hartschaumstoffe sind.

14. Verwendung gemäß Anspruch 12, wobei die Polyurethan-Polymere thermoplastische Polymere sind.

15. Polyethercarbonat-Polyoxymethylen-Block-Copolymere, erhältlich durch ein Verfahren gemäß einem oder mehreren der Ansprüche 1 bis 11.

## Claims

1. Process for preparing polyethercarbonate-polyoxymethylene block copolymers, comprising the step of polymerizing formaldehyde, **characterized in that** formaldehyde is polymerized in the presence of a polyethercarbonate having at least one Zerewitinoffactive hydrogen atom.

2. Process according to Claim 1, wherein formaldehyde is polymerized also in the presence of a catalyst.

3. Process according to Claim 1 or 2, wherein the polymerization is additionally effected in the presence of a comonomer.

4. Process according to one or more of Claims 1 to 3, wherein the formaldehyde is introduced into the reaction vessel as gaseous formaldehyde.

5. Process according to one or more of Claims 1 to 4, wherein the polyethercarbonate used to prepare the polyethercarbonate-polyoxymethylene block copolymers is prepared prior to the polymerization of the formaldehyde in the same reaction vessel and is reacted without purification steps.

6. Process according to one or more of Claims 1 to 5, wherein the polyethercarbonate used to prepare the polyethercarbonate-polyoxymethylene block copolymers is prepared from the starting materials starter compound, epoxide and carbon dioxide.

7. Process according to one or more of Claims 1 to 6, wherein the product mixture obtained in the preparation of the polyethercarbonate-polyoxymethylene block copolymers from the polymerization of formaldehyde in the presence of a polyethercarbonate having at least one Zerewitinoff-active hydrogen atom is reacted with cyclic carboxylic or carbonic esters.

8. Process according to one or more of Claims 1 to 7, wherein the product mixture obtained in the preparation of the polyethercarbonate-polyoxymethylene block copolymers from the polymerization of formaldehyde in the presence of a polyethercarbonate having at least one Zerewitinoff-active hydrogen atom, or the product mixture obtained by subsequent reaction with cyclic carboxylic or carbonic esters according to Claim 7, is converted by reaction with cyclic anhydrides to give carboxylic acid-functionalized polyethercarbonate-polyoxymethylene block copolymers.

9. Process according to one or more of Claims 1 to 8, wherein the product mixture obtained in the preparation of the polyethercarbonate-polyoxymethylene block copolymers from the polymerization of formaldehyde in the presence of a polyethercarbonate having at least one Zerewitinoff-active hydrogen atom, or the product mixture obtained by subsequent reaction with cyclic carboxylic or carbonic esters according to Claim 7 and/or by subsequent reaction with cyclic anhydrides according to Claim 8, is converted by reaction with epoxides to give hydroxy-functionalized polyethercarbonate-polyoxymethylene block copolymers.

10. Process according to one or more of Claims 1 to 9, further comprising the step of the reaction with isocyanates of the product mixture obtained in the preparation of the polyethercarbonate-polyoxymethylene block copolymers from the polymerization of formaldehyde in the presence of a polyethercarbonate having at least one Zerewitinoff-active hydrogen atom, or of the product mixture obtained by subsequent reaction with cyclic carboxylic or carbonic esters according to Claim 7 and/or by reaction with cyclic anhydrides according to Claim 8 and/or by reaction with epoxides according to Claim 9.

11. Process according to Claim 10, wherein the isocyanate is an aliphatic or aromatic di- or polyisocyanate and wherein a polyurethane or a polyamide is obtained from the reaction as product.

**12.** Use of polyethercarbonate-polyoxymethylene block copolymers according to one or more of Claims 1 to 11 for preparing polyurethane polymers.

**13.** Use according to Claim 12, wherein the polyurethane polymers are flexible polyurethane foams or rigid polyurethane foams.

**14.** Use according to Claim 12, wherein the polyurethane polymers are thermoplastic polymers.

**15.** Polyethercarbonate-polyoxymethylene block copolymers obtainable by a process according to one or more of Claims 1 to 11.

**Revendications**

**1.** Procédé de fabrication de copolymères séquencés de polyéthercarbonate-polyoxyméthylène, comprenant l'étape de polymérisation de formaldéhyde, **caractérisé en ce que** la polymérisation de formaldéhyde a lieu en présence d'un polyéthercarbonate contenant au moins un atome H actif selon Zerevitinoff.

**2.** Procédé selon la revendication 1, dans lequel la polymérisation de formaldéhyde a également lieu en présence d'un catalyseur.

**3.** Procédé selon la revendication 1 ou 2, dans lequel la polymérisation a également lieu en présence d'un comonomère.

**4.** Procédé selon une ou plusieurs des revendications 1 à 3, dans lequel le formaldéhyde est introduit dans le récipient de réaction sous la forme de formaldéhyde gazeux.

**5.** Procédé selon une ou plusieurs des revendications 1 à 4, dans lequel le polyéthercarbonate utilisé pour la fabrication des copolymères séquencés de polyéthercarbonate-polyoxyméthylène est fabriqué avant la polymérisation du formaldéhyde dans le même récipient de réaction et mis en réaction sans étapes de purification.

**6.** Procédé selon une ou plusieurs des revendications 1 à 5, dans lequel le polyéthercarbonate utilisé pour la fabrication des copolymères séquencés de polyéthercarbonate-polyoxyméthylène est fabriqué à partir des matières premières composé démarreur, époxyde et dioxyde de carbone.

**7.** Procédé selon une ou plusieurs des revendications 1 à 6, dans lequel le mélange de produits obtenu lors de la fabrication des copolymères séquencés de polyéthercarbonate-polyoxyméthylène à partir de la polymérisation de formaldéhyde en présence d'un polyéthercarbonate contenant au moins un atome H actif selon Zerevitinoff est mis en réaction avec des esters d'acides carboxyliques ou d'acide carbonique cycliques.

**8.** Procédé selon une ou plusieurs des revendications 1 à 7, dans lequel le mélange de produits obtenu lors de la fabrication des copolymères séquencés de polyéthercarbonate-polyoxyméthylène à partir de la polymérisation de formaldéhyde en présence d'un polyéthercarbonate contenant au moins un atome H actif selon Zerevitinoff ou le mélange de produits obtenu par réaction ultérieure avec des esters d'acides carboxyliques ou d'acide carbonique cycliques selon la revendication 7 est transformé par réaction avec des anhydrides cycliques en copolymères séquencés de polyéthercarbonate-polyoxyméthylène fonctionnalisés par des acides carboxyliques.

**9.** Procédé selon une ou plusieurs des revendications 1 à 8, dans lequel le mélange de produits obtenu lors de la fabrication des copolymères séquencés de polyéthercarbonate-polyoxyméthylène à partir de la polymérisation de formaldéhyde en présence d'un polyéthercarbonate contenant au moins un atome H actif selon Zerevitinoff ou le mélange de produits obtenu par réaction ultérieure avec des esters d'acides carboxyliques ou d'acide carbonique cycliques selon la revendication 7 et/ou par réaction ultérieure avec des anhydrides cycliques selon la revendication 8 est transformé par réaction avec des époxydes en copolymères séquencés de polyéthercarbonate-polyoxyméthylène fonctionnalisés par des groupes hydroxy.

**10.** Procédé selon une ou plusieurs des revendications 1 à 9, comprenant en outre l'étape de réaction du mélange de produits obtenu lors de la fabrication des copolymères séquencés de polyéthercarbonate-polyoxyméthylène à partir de la polymérisation de formaldéhyde en présence d'un polyéthercarbonate contenant au moins un atome H actif selon Zerevitinoff ou du mélange de produits obtenu par réaction ultérieure avec des esters d'acides carboxyliques

ou d'acide carbonique cycliques selon la revendication 7 et/ou par réaction avec des anhydrides cycliques selon la revendication 8 et/ou par réaction avec des époxydes selon la revendication 9 avec des isocyanates.

**11.** Procédé selon la revendication 10, dans lequel l'isocyanate est un di- ou polyisocyanate aliphatique ou aromatique et dans lequel un polyuréthane ou un polyamide est obtenu en tant que produit à partir de la réaction.

**12.** Utilisation de copolymères séquencés de polyéthercarbonate-polyoxyméthylène selon une ou plusieurs des revendications 1 à 11 pour la fabrication de polymères de polyuréthane.

**13.** Utilisation selon la revendication 12, dans laquelle les polymères de polyuréthane sont des mousses souples de polyuréthane ou des mousses dures de polyuréthane.

**14.** Utilisation selon la revendication 12, dans laquelle les polymères de polyuréthane sont des polymères thermoplastiques.

**15.** Copolymères séquencés de polyéthercarbonate-polyoxyméthylène, pouvant être obtenus par un procédé selon une ou plusieurs des revendications 1 à 11.

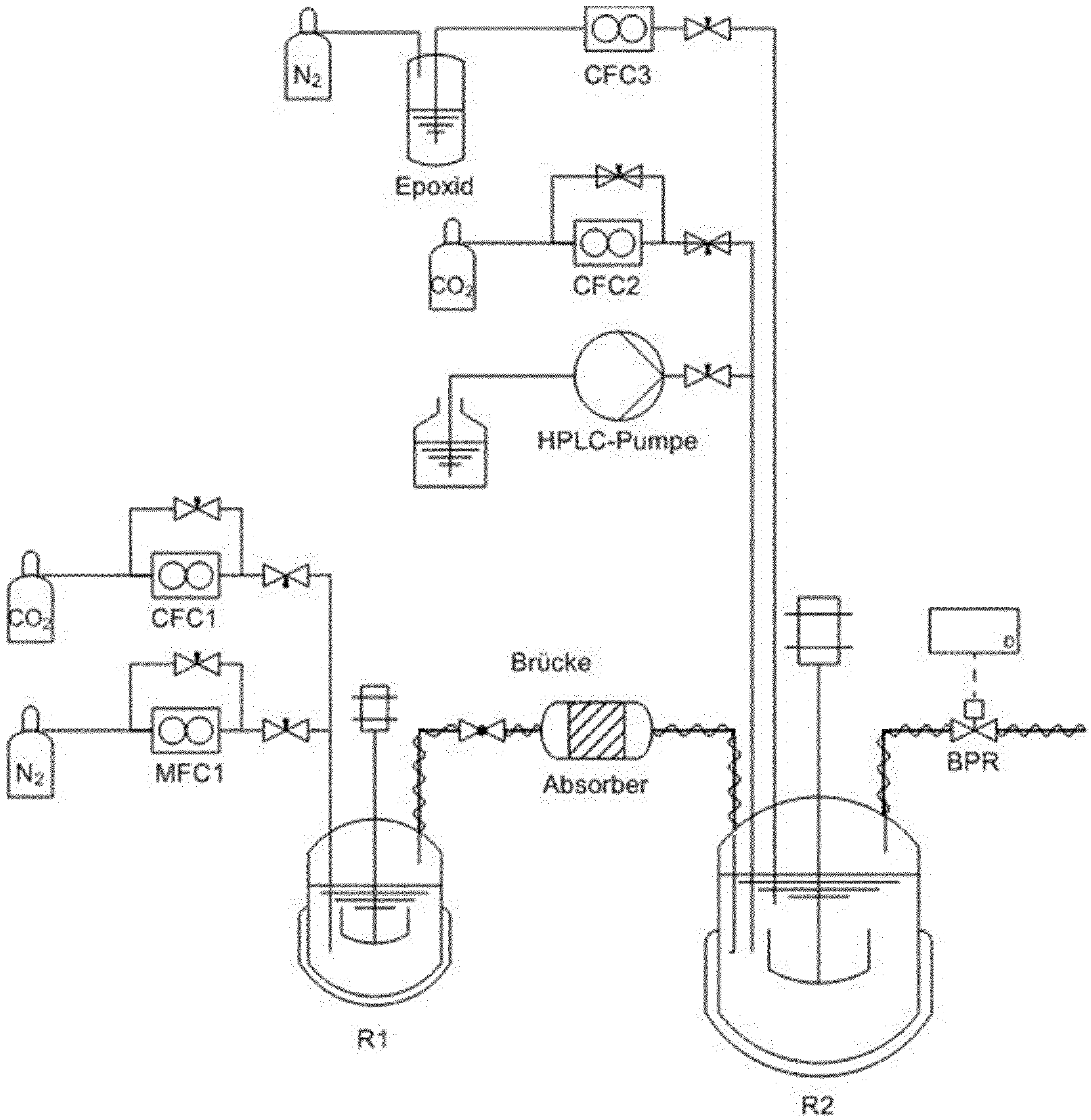
N2
Epoxid
CFC3
CO2
CFC2
HPLC-Pumpe
CO2
CFC1
N2
MFC1
Brücke
Absorber
BPR
D
R1
R2

FIG. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 807589 A
- EP 1418190 A1
- US 3754053 A
- US 20020016395 A
- JP 4306215 A
- GB 1164997 A
- US 4352914 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 10163170 A
- JP 4145123 B
- WO 0139883 A
- WO 0180994 A
- WO 2004081082 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- *CHEMICAL ABSTRACTS,* 30525-89-4